# EUROPEAN PATENT APPLICATION

(11) **EP 4 040 873 A1**
(43) Date of publication of application: **10.08.2022**
(21) Application number: 20882844.2
(22) Date of filing: 30.10.2020
(51) Int. Cl.: H04W 68/02, H04W 88/06

(54) **CONNECTION PROCESSING METHOD AND COMMUNICATION DEVICE**

(30) Priority: 01.11.2019 CN 201911062079
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Winter, Brandl - Partnerschaft mbB
(86) International application number: PCT/CN2020/125418
(87) International publication number: WO 2021/083353

(57) **Abstract**

Embodiments of the present invention provide a connection processing method and a communications device. A connection processing method applied to a first communications device includes: sending at least one of a first message and first information; where the first message includes any one of the following: a first NAS message, a first RRC message, a service request message, an RRC resume request message, an RRC resume complete message, an RRC setup message, an RRC connection setup complete message, a registration request message, an attach request message, and a TAU request message; and the first information includes at least one of the following: first indication information, first cause information, MICO indication information, PSM indication information, and first valid time information. With the method in the embodiments of the present invention, the terminal can quickly return to a non-connected state (for example, an idle state or an inactive state) after requesting to activate a connection.

## Description

### CROSS-REFERENCE TO RELATED APPLICATIONS

This application claims priority to Chinese Patent Application No. 201911062079.X, filed in China on November 1, 2019, which is incorporated herein by reference in its entirety.

### TECHNICAL FIELD

Embodiments of the present invention relate to the field of wireless communications technologies, and in particular, to a connection processing method and a communications device.

### BACKGROUND

In an existing network, a terminal may receive a paging from the network but does not respond to the paging. However, currently there is no mechanism for the network to distinguish whether the terminal receives the paging without responding, or receives no paging. For the former, the network keeps paging or expands a paging range, which inevitably results in a waste of paging resources. In addition, there is a case in which the terminal cannot receive data specific to the terminal from the network within a period of time, and triggering paging by the network in this case may also cause a waste of paging resources. How to avoid wasting paging resources is a technical problem to be resolved urgently at present.

### SUMMARY

Embodiments of the present invention provide a connection processing method and a communications device, so as to resolve the problem of how to avoid wasting paging resources.

In order to resolve the foregoing technical problem, the present invention is implemented as follows:

According to a first aspect, an embodiment of the present invention provides a connection processing method, applied to a first communications device and including:
sending at least one of a first message and first information; where
the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information; and
the first valid time information includes at least one of the following: valid time information of the first indication information, valid time information of the first cause information, valid time information of the MICO indication information, and valid time information of the PSM indication information.

According to a second aspect, an embodiment of the present invention provides a connection processing method, applied to a second communications device and including:
obtaining at least one of a first message and first information; and
performing a first operation according to at least one of the first message and the first information that are obtained; where
the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information; and
the first valid time information includes at least one of the following: valid time information of the first indication information, valid time information of the first cause information, valid time information of the MICO indication information, and valid time information of the PSM indication information; and
the first operation includes at least one of the following:
   sending the obtained first information and/or first message to a RAN network element;
   skipping activating, skipping establishing, or skipping resuming a user-plane resource for a data tunnel specific to a terminal;
   skipping transmitting, to the terminal, data specific to the terminal;
   skipping transmitting, to the terminal, user-plane data specific to the terminal, but transmitting, to the terminal, control-plane data specific to the terminal;
   discarding or continuing to cache control-plane data specific to the terminal;
   returning a data transfer failure notification to a second CN network element;
   returning, to the second CN network element, a data transfer failure cause being that the terminal does not transmit data, the terminal does not respond, a service is rejected, or the terminal is unreachable;
   sending, to the second CN network element, a request for caching data specific to the terminal and/or valid time information of data caching;
   requesting the second CN network element to discard data specific to the terminal;
   requesting the second CN network element not to send a data notification any longer;
   returning to a third CN network element that the terminal does not transmit data, the terminal is unreachable, or data is unable to reach the terminal;
   releasing or suspending a connection specific to the terminal;
   when data specific to the terminal arrives or is waiting, and the terminal is in a non-connected state, skipping triggering paging the terminal;
   rejecting activating, rejecting establishing, or rejecting resuming a connection between the terminal and a first network; and
   returning a reject cause, where the cause is that the first information is accepted, a connection is deactivated, a connection is released, or a connection is suspended.

According to a third aspect, an embodiment of the present invention provides a connection processing method, applied to a third communications device and including:
obtaining first information and/or a first message; and
performing a second operation according to the first information; where
the first information includes at least one of the following: first indication information, first cause information, MICO indication information, PSM indication information, and first valid time information;
the first valid time information includes at least one of the following: valid time information of the first indication information, valid time information of the first cause information, valid time information of the MICO indication information, and valid time information of the PSM indication information; and
the second operation includes at least one of the following:
   sending the obtained first information and/or first message to a CN network element;
   skipping activating, skipping establishing, or skipping resuming a user-plane resource for a data tunnel specific to a terminal;
   skipping transmitting, to the terminal, data specific to the terminal;
   skipping transmitting, to the terminal, user-plane data specific to the terminal, but transmitting, to the terminal, control-plane data specific to the terminal;
   discarding or continuing to cache data specific to the terminal;
   requesting the CN network element to release or suspend a connection specific to the terminal;
   deactivating, releasing, or suspending an RRC connection specific to the terminal;
   rejecting activating, rejecting establishing, or rejecting resuming an RRC connection between the terminal and a first network;
   returning a reject cause, where the cause is that the first information is accepted, a connection is deactivated, a connection is released, or a connection is suspended; and
   sending an RRC connection release message to the terminal, where the RRC connection release message includes an RRC connection suspend indication.

According to a fourth aspect, an embodiment of the present invention provides a connection processing method, applied to a fourth communications device and including:
in a case that a second condition is satisfied, controlling a connection related to a first network to enter a non-connected state, enter an idle state, or enter an inactive state; where
the second condition includes any one of the following:
   at least one of a first message and first information is sent to a first-network network element;
   at least one of the first message and the first information is sent to a first-network network element, and authentication with the first network has been completed;
   a second NAS message is received from the first-network network element;
   a service request accept message is received from the first-network network element;
   a service request accept message is received from the first-network network element, where the service request accept message includes any one of the following: indication information for connection release, indication information for connection suspension, and indication information for the first information being accepted;
   a service reject message, an RRC setup reject message, or an RRC resume reject message is received from the first-network network element; and
   a reject cause is received from the first-network network element, where the reject cause is any one of the following: a connection is deactivated, a connection is released, a connection is suspended, and the first information is accepted.

According to a fifth aspect, an embodiment of the present invention provides a communications device, and the communications device is a first communications device, including:
a sending module, configured to send at least one of a first message and first information; where
the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information; and
the first valid time information includes at least one of the following: valid time information of the first indication information, valid time information of the first cause information, valid time information of the MICO indication information, and valid time information of the PSM indication information.

According to a sixth aspect, an embodiment of the present invention provides a communications device, and the communications device is a second communications device, including:
a first obtaining module, configured to obtain at least one of a first message and first information; and
a first execution module, configured to perform a first operation according to at least one of the first message and the first information that are obtained; where
the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information;
the first valid time information includes at least one of the following: valid time information of the first indication information, valid time information of the first cause information, valid time information of the MICO indication information, and valid time information of the PSM indication information; and
the first operation includes at least one of the following:
   sending the obtained first information and/or first message to a RAN network element;
   skipping activating, skipping establishing, or skipping resuming a user-plane resource for a data tunnel specific to a terminal;
   skipping transmitting, to the terminal, data specific to the terminal;
   skipping transmitting, to the terminal, user-plane data specific to the terminal, but transmitting, to the terminal, control-plane data specific to the terminal;
   discarding or continuing to cache control-plane data specific to the terminal;
   returning a data transfer failure notification to a second CN network element;
   returning, to the second CN network element, a data transfer failure cause being that the terminal does not transmit data, the terminal does not respond, a service is rejected, or the terminal is unreachable;
   sending, to the second CN network element, a request for caching data specific to the terminal and/or valid time information of data caching;
   requesting the second CN network element to discard data specific to the terminal;
   requesting the second CN network element not to send a data notification any longer;
   returning to a third CN network element that the terminal does not transmit data, the terminal is unreachable, or data is unable to reach the terminal;
   releasing or suspending a connection specific to the terminal;
   when data specific to the terminal arrives or is waiting, and the terminal is in a non-connected state, skipping triggering paging the terminal;
   rejecting activating, rejecting establishing, or rejecting resuming a connection between the terminal and a first network; and
   returning a reject cause, where the cause is that the first information is accepted, a connection is deactivated, a connection is released, or a connection is suspended.

According to a seventh aspect, an embodiment of the present invention provides a communications device, and the communications device is a third communications device, including:
a second obtaining module, configured to obtain first information and/or a first message; and
a second execution module, configured to perform a second operation according to the first information and/or the first message; where
the first information includes at least one of the following: first indication information, first cause information, MICO indication information, PSM indication information, and first valid time information;
the first valid time information includes at least one of the following: valid time information of the first indication information, valid time information of the first cause information, valid time information of the MICO indication information, and valid time information of the PSM indication information; and
the second operation includes at least one of the following:
   sending the obtained first information and/or first message to a CN network element;
   skipping activating, skipping establishing, or skipping resuming a user-plane resource for a data tunnel specific to a terminal;
   skipping transmitting, to the terminal, data specific to the terminal;
   skipping transmitting, to the terminal, user-plane data specific to the terminal, but transmitting, to the terminal, control-plane data specific to the terminal;
   discarding or continuing to cache data specific to the terminal;
   requesting the CN network element to release or suspend a connection specific to the terminal;
   deactivating, releasing, or suspending an RRC connection specific to the terminal;
   rejecting activating, rejecting establishing, or rejecting resuming an RRC connection between the terminal and a first network;
   returning a reject cause, where the cause is that the first information is accepted, a connection is deactivated, a connection is released, or a connection is suspended; and
   sending an RRC connection release message to the terminal, where the RRC connection release message includes an RRC connection suspend indication.

According to an eighth aspect, an embodiment of the present invention provides a communications device, and the communications device is a fourth communications device, including:
a control module, configured to: in a case that a second condition is satisfied, control a connection related to a first network to enter a non-connected state, enter an idle state, or enter an inactive state; where
the second condition includes any one of the following:
   at least one of a first message and first information is sent to a first-network network element;
   at least one of the first message and the first information is sent to a first-network network element, and authentication with the first network has been completed;
   a second NAS message is received from the first-network network element;
   a service request accept message is received from the first-network network element;
   a service request accept message is received from the first-network network element, where the service request accept message includes any one of the following: indication information for connection release, indication information for connection suspension, and indication information for the first information being accepted;
   a service reject message, an RRC setup reject message, or an RRC resume reject message is received from the first-network network element; and
   a reject cause is received from the first-network network element, where the reject cause is any one of the following: a connection is deactivated, a connection is released, a connection is suspended, and the first information is accepted.

According to a ninth aspect, an embodiment of the present invention provides a communications device, including: a processor, a memory, and a computer program stored in the memory and capable of running on the processor, where when the computer program is executed by the processor, the steps of the connection processing method according to the first aspect are implemented, or the steps of the connection processing method according to the second aspect are implemented, or the steps of the connection processing method according to the third aspect are implemented, or the steps of the connection processing method according to the fourth aspect are implemented.

According to a tenth aspect, an embodiment of this disclosure provides a computer-readable storage medium, where a computer program is stored in the computer-readable storage medium, and when the computer program is executed by a processor, the steps of the connection processing method according to the first aspect are implemented, or the steps of the connection processing method according to the second aspect are implemented, or the steps of the connection processing method according to the third aspect are implemented, or the steps of the connection processing method according to the fourth aspect are implemented.

It is easy to understand that with this embodiment, the terminal can quickly return to a non-connected state (for example, an idle state or an inactive state) after requesting to activate the connection. The first network can also receive a paging response from the terminal and then stop paging, or does not trigger paging upon data arrival or waiting, thereby saving paging resources.

### BRIEF DESCRIPTION OF DRAWINGS

Other advantages and benefits will become apparent to those of ordinary skill in the art by reading detailed description of the example embodiments below. The accompanying drawings are merely intended to illustrate the objectives of the preferred embodiments and are not intended to limit the present invention. Throughout the accompanying drawings, the same reference numerals represent the same components. In the accompanying drawings:
FIG. 1 is a schematic flowchart of a connection processing method according to an embodiment of the present invention;
FIG. 2 is a schematic flowchart of a connection processing method according to another embodiment of the present invention;
FIG. 3 is a schematic flowchart of a connection processing method according to still another embodiment of the present invention;
FIG. 4 is a schematic flowchart of a connection processing method according to yet another embodiment of the present invention;
FIG. 5A is a schematic flowchart of a connection processing method in an application scenario 1A according to an embodiment of the present invention;
FIG. 5B is a schematic flowchart of a connection processing method in an application scenario 1B according to an embodiment of the present invention;
FIG. 6 is a schematic flowchart of a connection processing method in an application scenario 2 according to an embodiment of the present invention;
FIG. 7 is a schematic flowchart of a connection processing method in an application scenario 3A according to an embodiment of the present invention;
FIG. 8 is a schematic flowchart of a connection processing method in an application scenario 3B according to an embodiment of the present invention;
FIG. 9 is a structural diagram of another communications device according to the present invention;
FIG. 10 is a structural diagram of another communications device according to the present invention;
FIG. 11 is a structural diagram of another communications device according to the present invention;
FIG. 12 is a structural diagram of another communications device according to the present invention; and
FIG. 13 is a structural diagram of another communications device according to the present invention.

### DETAILED DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the specification and claims of this application, the term "include" and any other variants thereof are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device. In addition, in the specification and claims, the use of "and/or" represents presence of at least one of the connected objects, for example, "A and/or B" indicates the following three cases: A alone, B alone, or both A and B.

In the embodiments of the present invention, the terms such as "an example" or "for example" are used to represent an example, an illustration, or a description. Any embodiment or design scheme described as "an example" or "for example" in the embodiments of the present invention should not be construed as being more preferred or advantageous than other embodiments or design schemes. To be precise, the words such as "an example" or "for example" are intended to present a related concept in a specific manner.

In an existing network, there is a case that a terminal (such as a terminal supporting multiple cards, which is also referred to as a multi-card device) may receive a paging from the network but does not respond to the paging. For example, the multi-card terminal is configured with a card 1 and a card 2. An example of the card is a USIM card, which may be a physical card or an electronic card. When performing a service with a second network related to the card 2, the multi-card terminal may receive a paging from a first network related to the card 1. However, because a capability of the multi-card device cannot communicate with two networks simultaneously (for example, the capability of the multi-card device is single-transmit dual-receive or single-transmit single-receive), when the service of the second network is more important, service data of the first network may be discarded. At present, in order to reduce paging resources, the network may initiate paging in a last cell serving the terminal, and in a case of no response received from the terminal, gradually expands a paging range until a tracking area list (TAI List) configured for the terminal. However, currently there is no mechanism for the network to distinguish whether the terminal receives the paging without responding, or receives no paging. In this way, there is no information indicating that the multi-card terminal receives paging but does not respond, resulting in a waste of paging resources of the first network. However, if the multi-card terminal returns a paging response, a user-plane resource may be resumed and data transmission may be started, which may interrupt the service of the second network.

In order to ensure the service of the second network and avoid wasting the paging resources of the first network, an implementation solution is: the multi-card terminal responds to the paging of the first network at an interval, for example, 20 ms to 40 ms, of a service between the multi-card terminal and the second network, so that the first network stops paging the multi-card terminal; and the multi-card terminal requests the first network not to transmit data and/or requests to reject activating a connection between the terminal and the first network. The first network may continue to cache or discard data specific to the multi-card terminal, and deactivate a connection of the multi-card terminal.

In addition, the following problems still need to be resolved:
Problem 1: Requesting is performed to the first network by using a service request message; however, the service request message is used by default to request to resume a user-plane resource for a protocol data unit (Protocol Data Unit, PDU) session. When the first network caches data specific to the multi-card terminal (hereinafter referred to as UE), after receiving the service request message from the UE, the first network may start to resume a user-plane resource for a PDU session related to the cached data, and may also start to transmit control-plane data.
Problem 2: With a MICO (Mobile Initiated Connection Only) indication or a PSM (Power Saving Mode) indication, the first network may be enabled to cache subsequently arrived data without paging the UE, before the UE enters an idle (idle) state again. However, the data that triggers the paging to make the UE enter the connected state is not controlled by the MICO indication because MICO negotiation has not been performed.
Problem 3: In addition that the data triggering this paging is not received, the UE may perform a long-time service (such as no disturb for gaming) with the second network, and may not access the first network for a long time. In this case, the UE may perform MICO or PSM negotiation with the first network at an interval of the service with the second network. However, the existing MICO negotiation is performed in a registration process after the service request (Service Request, SR) process, and the existing PSM negotiation is performed in a TAU process after the service request process. The existing MICO and PSM negotiation possibly cannot be completed at an interval of the service between the UE and the second network.
Problem 4: In order to minimize impact on the service with the second network, an interaction time between the UE and the first network needs to be as short as possible. How to shorten the interaction time between the UE and the first network is also a problem to be resolved in the present invention.

In the embodiments of the present invention, optionally, obtaining may be construed as acquiring from configuration, receiving, obtaining through receiving upon a request, obtaining through self-learning, obtaining through deduction based on non-received information, or obtaining through processing received information, which may be determined according to actual needs. This is not limited in the embodiments of the present invention. For example, when specific capability indication information sent by a device is not received, it can be deduced that the device does not support such capability.

Optionally, sending may include broadcasting, broadcasting through a system message, or returning a response after receiving the request.

In an embodiment of the present invention, a network element of the first network (or referred to as a first-network network element) includes at least one of the following: a core-network network element of the first network and a radio-access-network network element of the first network. A network element of the second network (or referred to as a second-network network element) includes at least one of the following: a core-network network element of the second network and a radio-access-network network element of the second network

In an embodiment of the present invention, the first network may be a public network, and the second network may be a non-public network; or the first network may be a non-public network, and the second network may be a public network; or the first network may be a first non-public network, and the second network may be a second non-public network; or the first network may be a first public network, and the second network may be a second public network.

In an embodiment of the present invention, the non-public network is an abbreviation of the non-public network. The non-public network may be referred to as one of the following: a non-public communications network. The non-public network may include at least one of the following deployment manners: a physical non-public network, a virtual non-public network, and a non-public network implemented on a public network. In an implementation, the non-public network is a closed access group (Closed Access Group, CAG). One CAG may include a group of terminals.

In an embodiment of the present invention, the non-public network may include or be referred to as a private network. The private network may be referred to as one of the following: a private communications network, a private network, a local area network (LAN), a private virtual network (PVN), an isolated communications network, a dedicated communications network, or other names. It should be noted that the naming manner is not specifically limited in the embodiments of the present invention.

In an embodiment of the present invention, the public network is an abbreviation of the public network. The public network may be referred to as one of the following: a public communications network or other names.

In an embodiment of the present invention, the communications device may include at least one of the following: a communications network element and a terminal.

In an embodiment of the present invention, the communications network element may include at least one of the following: a core-network network element (CN network element) and a radio-access-network network element (RAN network element).

In the embodiments of the present invention, a CN network element may include but is not limited to at least one of the following: a core network device, a core network node, a core network function, a core-network network element, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), and an application function (Application Function, AF).

In the embodiments of the present invention, the RAN network element may include but is not limited to at least one of the following: a radio access network device, a radio access network node, a radio access network function, a radio access network network element, a 3GPP radio access network, a non-3GPP radio access network, a centralized unit (Centralized Unit, CU), a distributed unit (Distributed Unit, DU), a base station, an evolved NodeB (evolved Node B, eNB), a 5G NodeB (gNB), a radio network controller (Radio Network Controller, RNC), a NodeB (NodeB), a non-3GPP interworking function (Non-3GPP InterWorking Function, N3IWF), an access controller (Access Controller, AC) node, an access point (Access Point, AP) device, a wireless local area network (Wireless Local Area Networks, WLAN) node, or an N3IWF.

Optionally, a base station may be a base transceiver station (BTS, Base Transceiver Station) in GSM or CDMA, or may be a NodeB (NodeB) in WCDMA, or may be an evolved NodeB (eNB or e-Node B, evolved Node B) in LTE or a 5G NodeB (gNB), which is not limited in the embodiments of the present invention.

Optionally, the terminal may include a relay supporting terminal functions and/or a terminal supporting relay functions. The terminal may also be referred to as a terminal device or user terminal (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of the present invention.

In an embodiment of the present invention, data specific to the terminal includes: at least one of control-plane data and user-plane data.

In an embodiment of the present invention, transmitting includes at least one of sending and receiving.

In an embodiment of the present invention, skipping transmitting may be referred to as blocking transmission. For example, skipping transmitting data specific to the terminal may be referred to as blocking transmission of the data specific to the terminal.

In an embodiment of the present invention, activating, establishing, or resuming a user-plane resource for a data tunnel specific to the terminal may be construed as activating the user-plane resource for the data tunnel specific to the terminal.

In an embodiment of the present invention, the data tunnel may include at least one of the following: a PDU session, a quality of service (Quality of Service, QoS) flow, an evolved packet system (Evolved Packet System, EPS) bearer, a PDP context, a DRB, an SRB, and an Internet Protocol Security (Internet Protocol Security, IPsec) tunnel.

Optionally, the IPsec tunnel may be an IPsec security association SA. The IPsec tunnel may be referred to as one of the following: a signaling IPsec SA, a primary IPsec SA, an IPsec SA used for transmitting control signaling, or other names, which is not specifically limited in the present invention. The data IPsec tunnel may be referred to as one of the following: data IPsec SA, IPsec sub-SA, IPsec SA used for transmitting user-plane data, IPsec SA used for transmitting QoS flow data, or other names, which is not specifically limited in the present invention.

In an embodiment of the present invention, activating may also be construed as activating, establishing, or resuming. Deactivating can also be construed as releasing or suspending.

In an embodiment of the present invention, a control-plane connection includes: a non-access stratum (Non-Access Stratum, NAS) signaling connection.

In an embodiment of the present invention, control-plane data includes: NAS data (including NAS signaling).

In an embodiment of the present invention, skipping triggering a paging or skipping triggering paging the terminal includes: skipping triggering a paging or skipping triggering paging the terminal when data specific to the terminal arrives or is waiting.

In an embodiment of the present invention, an idle state may be one of the following: a configuration management (Configuration Management, CM) state is idle or a radio resource control (Radio Resource Control, RRC) state is idle.

In an embodiment of the present invention, valid time information includes at least one of the following: a start time, an end time, duration, and a period of time.

In an embodiment of the present invention, PSM indication information or a PSM indication includes: a T3324 value.

In an embodiment of the present invention, paging may include a notification (notification); and a paging response may include a notification response.

In an embodiment of the present invention, a first NAS message is a NAS message different from an existing NAS message (for example, a service request message).

In an embodiment of the present invention, a first RRC message is an RRC message different from an existing RRC message (for example, an RRC resume request message, an RRC resume complete message, and an RRC setup message).

The following describes a connection processing method in the embodiments of the present invention.

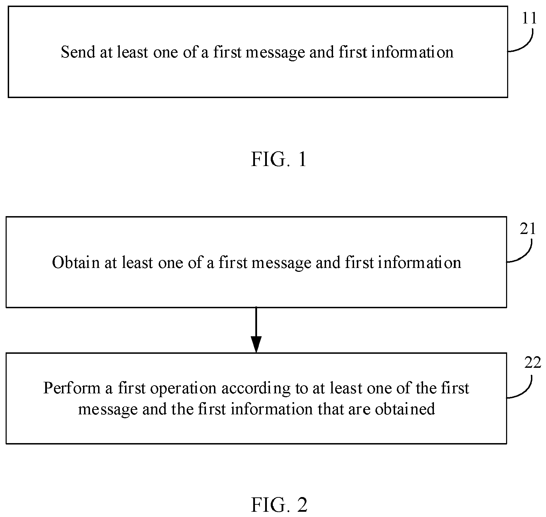

Referring to FIG. 1, an embodiment of the present invention provides a connection processing method, applied to a first communications device. The first communications device includes but is not limited to at least one of the following: a terminal. As shown in FIG. 1, the method includes the following step.

Step 11: Send at least one of a first message and first information.

The first message includes any one of the following: a first non-access stratum (Non-Access Stratum, NAS) message, a first RRC message, a service request message, an RRC resume request message, an RRC resume complete message, an RRC setup message, an RRC connection setup complete message, a registration request message, an attach request message, and a tracking area update (Tracking Area Update, TAU) request message;
the first information includes at least one of the following: first indication information, first cause information, MICO indication information, PSM indication information, and first valid time information; and
the first valid time information includes at least one of the following: valid time information of the first indication information, valid time information of the first cause information, valid time information of the MICO indication information, and valid time information of the PSM indication information.

In an implementation, sending the first message and the first information may be construed as: sending the first message, where the first message includes the first information.

Optionally, the first information may be sent by being included in any one of the following messages:
a first NAS message, a first RRC message, a service request message, an RRC setup request message, an RRC setup complete message, an RRC connection resume request message, an RRC connection resume complete message, a connection suspend request message (such as a NAS message of connection suspend request), a registration request message, a TAU request message, an attach request message, a connection setup request specific to the terminal between a RAN network element and a CN network element (such as an initial UE message), and a connection resume request specific to the terminal between the RAN network element and the CN network element (such as an S1 resume request and an N2 resume request).

Optionally, at least one of the first message and the first information is sent to a target end. The target end includes at least one of the following: a RAN network element and a CN network element (such as an MME or an AMF).

(I) Optionally, the first NAS message or the first RRC message may be used for at least one of the following:
responding to paging, and requesting to activate, requesting to establish, or requesting to resume a connection between a terminal and a first network;
indicating not transmitting data specific to the terminal;
requesting not to activate, not to establish, or not to resume a user-plane resource for a data tunnel specific to the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and a first network;
requesting a connection between the terminal and the first network to enter a non-connected state, to enter an idle state, or to enter an inactive state;
requesting to reject activating, reject establishing, or reject resuming a connection between the terminal and the first network;
requesting to return a service reject for a service request of the terminal; and
requesting not to trigger paging the terminal.

In an implementation, the requesting to reject activating, reject establishing, or reject resuming a connection between the terminal and the first network includes that the first network returns at least one of the following: a service reject, an RRC setup reject, an RRC resume reject, and a connection resume reject (for example, an S1 resume reject or N2 resume reject) specific to the UE between the RAN network element and the CN network element.

In an implementation, the skipping triggering paging the terminal includes: skipping triggering paging the terminal when data specific to the terminal arrives or is waiting. (For example, when other data specific to the terminal arrives at the first network or is waiting in the first network, the first network no longer triggers paging the terminal).

In an implementation, the data specific to the terminal includes at least one of control-plane data (such as signaling) and user-plane data. The skipping transmitting data specific to the terminal may be skipping transmitting control-plane data specific to the terminal, or skipping transmitting user-plane data specific to the terminal, or skipping transmitting control-plane and user-plane data specific to the terminal. It is easy to understand that, generally, importance of the control-plane data is higher than that of the user-plane data. In an implementation, when the user-plane data is not transmitted to the terminal, the control-plane data still needs to be transmitted to the terminal.

In an implementation, the terminal sends a first NAS message to a first CN network element (for example, an AMF or an MME). The first NAS message may be used for responding to paging and used for indicating not transmitting all data specific to the UE, and the data includes the control-plane data and user-plane data; or the first NAS message may be used for requesting the first CN network element not to establish a user-plane resource for a data tunnel specific to the terminal or not to transmit the user-plane data specific to the terminal; or the first NAS message is used for requesting the first CN network element to cache or discard the data specific to the UE. The first CN network element may be a CN network element of the first network.

(I) Optionally, in at least one embodiment of the present invention, the first indication information (such as a first service type) may be used for at least one of the following:
indicating a paging response (such as mobile-terminated access (MT-access) or mobile-terminated service (mobile terminated services)), a connection being activated, a connection being established, or a connection being resumed;
indicating not transmitting data specific to the terminal;
requesting not to activate, not to establish, or not to resume a user-plane resource for a data tunnel specific to the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and the first network;
requesting a connection between the terminal and the first network to enter a non-connected state, to enter an idle state, or to enter an inactive state;
requesting to reject activating, reject establishing, or reject resuming a connection between the terminal and the first network;
requesting to return a service reject for a service request of the terminal; and
requesting not to trigger paging the terminal.

In an implementation, the skipping triggering paging the terminal includes: skipping triggering paging the terminal when data specific to the terminal arrives or is waiting.

In an implementation, when the first indication information is included in the service request message, the first indication information is expressed as first service type information. The first service type information is a service type value in the service request message.

In an implementation, the requesting to reject activating, reject establishing, or reject resuming a connection between the terminal and the first network includes at least one of the following:
requesting to return an RRC suspension (for example, returning an RRC release, where the RRC connection release indicates suspension) or an RRC connection release for an RRC setup request (such as an RRC setup request including the first indication information);
requesting to return an RRC connection suspension (for example, returning an RRC connection release, where the RRC connection release indicates suspension) or an RRC connection release to an RRC resume request (such as an RRC resume request including the first indication information); and
requesting to return a service request reject for a service request (such as a service request including the first indication information).

(II) Further, the first indication information may have but is not limited to the following forms:
(1) the first indication information includes at least one of the following: indication information that indicates not transmitting control-plane data, and indication information that indicates not transmitting user-plane data;
(2) the first indication information includes at least one of the following: indication information that indicates requesting to cache control-plane data specific to a terminal, and indication information that indicates requesting to cache user-plane data specific to the terminal;
(3) the first indication information includes at least one of the following: indication information that indicates requesting to discard control-plane data specific to the terminal, and indication information that indicates requesting to discard user-plane data specific to the terminal;
(4) the first indication information includes at least one of the following: indication information indicating that the control-plane data is unable to reach the terminal, and indication information indicating that the user-plane data is unable to reach the terminal; and
(5) The first indication information includes at least one of the following: indication information indicating that the user-plane data is not allowed to trigger paging the terminal, and indication information indicating that the user-plane data is not allowed to trigger paging the terminal.

(III) Optionally, in at least one embodiment of the present invention, the first indication information may be used for at least one of the following:
indicating whether to transmit data specific to a terminal, where the first indication information may be specifically used to indicate whether to transmit control-plane data specific to the terminal, and/or to indicate whether to transmit user-plane data specific to the terminal;
indicating whether to request to activate, whether to request to establish, or whether to request to resume a user-plane resource for a data tunnel specific to the terminal;
indicating whether to request to cache data specific to the terminal;
indicating whether to request to discard data specific to the terminal;
indicating whether the terminal is reachable;
indicating whether data is able to reach the terminal;
indicating whether to request to deactivate, release, or suspend a connection between the terminal and the first network;
indicating whether to request a connection between the terminal and the first network to enter a non-connected state, to enter an idle state, or to enter an inactive state;
indicating whether to request to reject activating, whether to request to reject establishing, or whether to request to reject resuming a connection between the terminal and the first network; and
indicating whether to request not to trigger paging the terminal.

In an implementation, the indicating whether to request not to trigger paging the terminal includes: indicating whether to request not to trigger paging the terminal when data specific to the terminal arrives or is waiting.

(IV) Further, the first indication information may have but is not limited to the following forms:
(1) the first indication information includes at least one of the following: indication information indicating whether to transmit control-plane data, and indication information indicating whether to transmit user-plane data (also referred to as indication information indicating whether to establish a user-plane resource for a data tunnel specific to the terminal);
(2) the first indication information includes at least one of the following: indication information indicating whether to request to cache control-plane data specific to a terminal, and indication information indicating whether to request to cache user-plane data specific to the terminal;
(3) the first indication information includes at least one of the following: indication information indicating whether to request to discard control-plane data specific to a terminal, and indication information indicating whether to request to discard user-plane data specific to the terminal;
(4) the first indication information includes at least one of the following: indication information indicating whether the control-plane data is able to reach the terminal, and indication information indicating whether the user-plane data is able to reach the terminal; and
(5) the first indication information includes at least one of the following: indication information indicating whether the control-plane data triggers a paging to the terminal, and indication information indicating whether the user-plane data triggers a paging to the terminal.

In an implementation, the first indication information may indicate transmitting control-plane data specific to the terminal, and indicate not transmitting user-plane data specific to the terminal. It is easy to understand that, generally, importance of the control-plane data is higher than that of the user-plane data. In an implementation, when the user-plane data is not transmitted to the terminal, the control-plane data still needs to be transmitted to the terminal.

In an implementation, the first information may include the first indication information and valid time information of a first indication. The first indication information may indicate not transmitting data, and request to cache data not to be transmitted. The valid time information of the first indication may be valid time information of caching data specific to the terminal.

In an implementation, the first information may include the first indication information and valid time information of a first indication. The first indication information may indicate not transmitting data. The valid time information of the first indication may be valid time information for not transmitting data. In this way, the terminal can be paged again after a period of time indicated by the valid time information elapses, and the terminal is not paged within the period of time indicated by the valid time information, unless the terminal performs SR or connection establishment in advance to lift such limitation.

(I) In at least one embodiment of the present invention, the first cause information may be used for at least one of the following:
indicating a paging response (such as mobile-terminated access MT-access or mobile-terminated service mobile terminated services), an RRC connection being activated, an RRC connection being established, or an RRC connection being resumed;
indicating not transmitting data specific to the terminal;
requesting not to activate, not to establish, or not to resume a user-plane resource for a data tunnel specific to the terminal;
requesting to establish or resume only a control-plane connection of the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and a first network;
requesting a connection between the terminal and the first network to enter a non-connected state, to enter an idle state, or to enter an inactive state;
requesting to reject activating, reject establishing, or reject resuming a connection (for example, RRC connection or CM connection) between the terminal and the first network; and
requesting not to trigger paging the terminal.

In an implementation, the skipping triggering paging the terminal includes: skipping triggering paging the terminal when data specific to the terminal arrives or is waiting.

In an implementation, the requesting to reject activating, reject establishing, or reject resuming a connection between the terminal and the first network includes at least one of the following:
requesting to return an RRC suspension (for example, returning an RRC release, where the RRC connection release indicates suspension) or an RRC connection release for an RRC setup request (such as an RRC setup request including the first cause information);
requesting to return an RRC connection suspension (for example, returning an RRC connection release, where the RRC connection release indicates suspension) or an RRC connection release to an RRC resume request (such as an RRC resume request including the first cause information); and
requesting to return a service request reject for a service request.

In an implementation, when the first cause information is included in a message that is specific to the terminal between the RAN network element and the CN network element and that contains the service request, the first cause information may be used for requesting to return a service request reject for the service request. The message specific to the terminal between the RAN network element and the CN network element include an N2 messages or an S1 message, for example, an initial UE message.

In an implementation, the first cause information is an RRC setup cause. In another implementation, the first cause information is an RRC resume cause.

In an implementation, the data specific to the terminal includes at least one of the following: control-plane data specific to the terminal and user-plane data specific to the terminal.

(1) In at least one embodiment of the present invention, before step 11, the method may further include: receiving a paging.

In this case, optionally, the data specific to the terminal is: data that is specific to the terminal and that triggers the paging (control-plane and/or user-plane data that triggers the paging). Optionally, the control-plane data specific to the terminal is: control-plane data that is specific to the terminal and that triggers the paging. Optionally, the user-plane data specific to the terminal is: user-plane data that is specific to the terminal and that triggers the paging.

It is easy to understand that the indicating not transmitting data specific to the terminal is: indicating not transmitting the data that is specific to the terminal and that triggers the paging. In an implementation, the first-network network element (such as a RAN network element or a CN network element) discards or caches only data that is specific to the terminal and that triggers current paging. When other data specific to the terminal arrives or is waiting subsequently, the first-network network element can still page the terminal, and the terminal can still respond to the paging to determine whether the data is to be transmitted, and return the first information and/or the first message.

(2) Further, the data specific to the terminal is: all data specific to the terminal (for example, all control-plane and/or user-plane data specific to the terminal). In an implementation, the first-network network element discards or caches all the data specific to the terminal. When other data specific to the terminal arrives or is waiting, the terminal is no longer paged. In a second implementation, the terminal may negotiate with the first network by using the first indication information, MICO indication information, or PSM indication information

(3) Further, the data specific to the terminal is: all data specific to the terminal within a period of time indicated by the first valid time information. In an implementation, the first-network network element discards or caches all data specific to the terminal within the period of time indicated by the first valid time information. Within the period of time indicated by the first valid time information, the terminal is no longer paged even if data specific to the terminal arrives or is waiting.

Optionally, the first valid time information (for example, valid time information of the first indication information or valid time information of the first cause information) may include at least one of the following:
valid time information for not transmitting data specific to a terminal;
valid time information for caching data specific to the terminal;
valid time information for discarding data specific to the terminal;
valid time information for the terminal being unreachable;
valid time information for data being unable to reach the terminal;
valid time information for a connection between the terminal and a first network remaining deactivated, released, or suspended;
valid time information for a connection between the terminal and a first network remaining in an idle state or an inactive state; and
valid time information for not triggering paging the terminal.

In an implementation, the valid time information for not triggering a paging to the terminal includes: within the period of time indicated by the valid time information, paging the terminal is not triggered when data specific to the terminal arrives or is waiting.

In at least one embodiment of the present invention, the foregoing step 11 may include:
if the first condition is satisfied, sending at least one of the first message and the first information.

The first condition includes at least one of the following:
paging from a first network has been received;
it is determined that a connection to the first network remains deactivated, released, or suspended;
it is determined to discard data specific to the terminal from the first network;
it is determined to receive only control-plane data that is specific to the terminal and that comes from the first network, and it is determined to discard user-plane data that is specific to the terminal and that comes from the first network;
it is determined not to immediately receive data that is specific to the terminal and that comes from the first network;
it is determined to request the first network to continue to cache data specific to the terminal;
it is determined not to activate, establish, or resume a user-plane resource for a data tunnel specific to the terminal with the first network; and
it is determined not to perform data transmission with the first network.

(1) In at least one embodiment of the present invention, before step 11, the method may further include:
receiving a paging.

In this case, optionally, the data specific to the terminal is: data that is specific to the terminal and that triggers the paging.

Optionally, the control-plane data specific to the terminal is: control-plane data that is specific to the terminal and that triggers the paging.

Optionally, the user-plane data specific to the terminal is: user-plane data that is specific to the terminal and that triggers the paging.

It is easy to understand that, in this case, the skipping transmitting data specific to a terminal is: skipping transmitting the data that is specific to the terminal and that triggers the paging. In an implementation, when other data specific to the terminal arrives or is waiting subsequently, the first network can still page the terminal, and the terminal can still respond to the paging and return the first information and/or the first message to determine whether the data is to be transmitted.

(2) In at least one embodiment of the present invention, optionally, the data specific to the terminal is: all data specific to the terminal.

Optionally, the control-plane data specific to the terminal is: all control-plane data specific to the terminal.

Optionally, the user-plane data specific to the terminal is: all user-plane data specific to the terminal.

It is easy to understand that, in this case, the skipping transmitting data specific to a terminal is: skipping transmitting all the data specific to the terminal. In an implementation, all data of the terminal is all existing and future data specific to the terminal. When other data specific to the terminal arrives or is generated subsequently, the first network determines, according to the previously received first information and/or the first message, whether to transmit the data to the terminal and whether to page the terminal again. For example, in a case that the terminal indicates not transmitting data specific to the terminal and the terminal is in a non-connected state, the first network may not trigger paging the terminal when the data specific to the terminal arrives. After the terminal lifts a limitation of not transmitting data specific to the terminal (for example, indicating transmitting data specific to the terminal), when the terminal is in a non-connected state and the data specific to the terminal arrives, the first network may trigger paging the terminal.

(3) In at least one embodiment of the present invention, optionally, the data specific to the terminal is: all data specific to the terminal within a period of time indicated by the first valid time information.

Optionally, the control-plane data specific to the terminal is: all control-plane data specific to the terminal within a period of time indicated by the first valid time information.

Optionally, the user-plane data specific to the terminal is: all user-plane data specific to the terminal within a period of time indicated by the first valid time information.

It is easy to understand that, in this case, the skipping transmitting data specific to a terminal is: skipping transmitting all data specific to the terminal within a period of time indicated by the first valid time information. In an implementation, the first network determines, according to the previously received first information and/or first message, whether to transmit data to the terminal and whether to page the terminal again. For example, if the terminal indicates not transmitting data within a specific period of time, when the terminal is in a non-connected state and data specific to the terminal arrives within the period of time, the first network may not trigger paging the terminal. After the period of time elapses, when the terminal is in a non-connected state and the data specific to the terminal arrives, the first network may trigger paging the terminal.
(1) In an implementation, the indicating not transmitting data specific to the terminal may include one of the following:
   indicating not transmitting data that is specific to the terminal and that triggers paging;
   indicating not transmitting all data specific to the terminal;
   indicating not transmitting all data of the terminal within a valid period of time, where the valid period of time is a valid period of time indicated by the valid time information for not transmitting data specific to the terminal;
   indicating not transmitting control-plane data that is of the terminal and that triggers the paging;
   indicating not transmitting all control-plane data specific to the terminal;
   indicating not transmitting all control-plane data specific to the terminal within a valid period of time, where the valid period of time is a valid period of time indicated by the valid time information for not transmitting data (for example, control-plane data) specific to the terminal;
   indicating not transmitting user-plane data that is of the terminal and that triggers the paging;
   indicating not transmitting all user-plane data of the terminal; and
   indicating not transmitting all user-plane data of the terminal within a valid period of time, where the valid period of time is a valid period of time indicated by the valid time information for not transmitting data (for example, user-plane data) specific to the terminal.
(2) In an implementation, the requesting to cache data specific to the terminal may include one of the following:
   requesting to cache data that is specific to the terminal and that triggers paging;
   requesting to cache all data specific to the terminal;
   requesting to cache all data specific to the terminal within a valid period of time, where the valid period of time is a valid period of time indicated by the valid time information for caching data specific to the terminal;
   requesting to cache control-plane data that is specific to the terminal and that triggers paging;
   requesting to cache all control-plane data specific to the terminal;
   requesting to cache all control-plane data specific to the terminal within a valid period of time, where the valid period of time is a valid period of time indicated by the valid time information for caching data (for example, control-plane data) specific to the terminal;
   requesting to cache user-plane data that is specific to the terminal and that triggers paging;
   requesting to cache all user-plane data specific to the terminal; and
   requesting to cache all user-plane data specific to the terminal within a valid period of time, where the valid period of time is a valid period of time indicated by the valid time information for caching data (for example, user-plane data) specific to the terminal.
(3) In an implementation, the requesting to discard data specific to the terminal may include one of the following:
   requesting to discard data that is specific to the terminal and that triggers paging;
   requesting to discard all data specific to the terminal;
   requesting to discard all data of the terminal within a valid period of time, where the valid period of time is a valid period of time indicated by the valid time information for discarding data specific to the terminal;
   requesting to discard control-plane data that is specific to the terminal and that triggers paging;
   requesting to discard all control-plane data specific to the terminal;
   requesting to discard all control-plane data specific to the terminal within a valid period of time, where the valid period of time is a valid period of time indicated by the valid time information for discarding data (for example, control-plane data) specific to the terminal;
   requesting to discard user-plane data that is specific to the terminal and that triggers paging;
   requesting to discard all user-plane data specific to the terminal; and
   requesting to discard all user-plane data specific to the terminal within a valid period of time, where the valid period of time is a valid period of time indicated by the valid time information for discarding data (for example, user-plane data) specific to the terminal.

It is easy to understand that, in this embodiment, when the terminal (such as a multi-card terminal) receives a paging from the first network and determines not to receive data specific to the terminal from the first network, the terminal still responds to the paging, and through the paging response, indicates not transmitting (for example, not receiving) the data. In this way, the first network does not need to establish a user-plane resource for the data tunnel specific to the terminal, neither needs to transmit data to the terminal, so that the terminal can quickly return to a non-connected state (such as an idle state or an inactive state). In addition, and the first network can receive a paging response from the terminal and stops paging. This reduces paging resources, and avoids ineffective resource overheads such as paging resources, user-plane resource allocation, and data scheduling.

Referring to FIG. 2, an embodiment of the present invention provides a connection processing method, applied to a second communications device. The second communications device includes but is not limited to: a first CN network element (for example, an MME or an AMF). As shown in FIG. 2, the method includes the following steps.

Step 21: Obtain at least one of a first message and first information.

Step 22: Perform a first operation according to at least one of the first message and the first information that are obtained.

The first CN network element may be a CN network element of a first network.

The first message includes any one of the following: a first NAS message, a first RRC message, a service request message, an RRC resume request message, an RRC resume complete message, an RRC setup message, an RRC connection setup complete message, a registration request message, an attach request message, and a TAU request message.

The first information includes at least one of the following: first indication information, first cause information, MICO indication information, PSM indication information, and first valid time information.

The first valid time information includes at least one of the following: valid time information of the first indication information, valid time information of the first cause information, valid time information of the MICO indication information, and valid time information of the PSM indication information.

In an implementation, sending the first message and the first information may be construed as: sending the first message, where the first message includes the first information.

Optionally, the first indication information is specifically described in the embodiment of FIG. 1, and details are not described herein again.

Optionally, the first cause information is specifically described in the embodiment of FIG. 1, and details are not described herein again.

Optionally, the first valid time information is specifically described in the embodiment of FIG. 1, and details are not described herein again.

In an implementation, the first message and/or the first information is obtained from at least one of the following: a terminal and a RAN network element. In an implementation, the terminal sends the first information (for example, the first cause information) to the RAN network element, and the RAN network element sends the received first information (for example, the first cause information) to the second communications device.

Optionally, the first operation includes at least one of the following:
sending the obtained first information and/or first message to the RAN network element;
skipping activating, skipping establishing, or skipping resuming a user-plane resource for a data tunnel specific to the terminal (for example, all data tunnels, without user-plane resources, of the terminal);
skipping transmitting, to the terminal, data (user-plane data and/or control-plane data) specific to the terminal;
skipping transmitting, to the terminal, user-plane data specific to the terminal, but transmitting, to the terminal, control-plane data specific to the terminal;
discarding or continuing to cache control-plane data specific to the terminal;
returning a data transfer failure notification to a second CN network element (for example, an SMF or an SGW);
returning, to the second CN network element (for example, an SMF or an SGW), a data transfer failure cause being that the terminal does not transmit data, the terminal does not respond, a service is rejected, or the terminal is unreachable;
sending, to the second CN network element (for example, an SMF), a request for caching data specific to the terminal and/or valid time information of data caching;
requesting the second CN network element (for example, an SMF or an SGW) to discard data specific to the terminal;
requesting the second CN network element (for example, an SMF or an SGW) not to send a data notification any longer;
returning to a third CN network element (for example, an LMF, a UDM, or a PCF) that the terminal does not transmit data, the terminal does not respond, the terminal is unreachable, or data is unable to reach the terminal;
releasing or suspending a connection specific to the terminal;
when data specific to the terminal arrives or is waiting (for example, a data notification specific to the terminal is received or a NAS data packet is generated), and the terminal is in a non-connected state, skipping triggering paging the terminal;
rejecting activating, rejecting establishing, or rejecting resuming a connection between the terminal and a first network; and
returning a reject cause (for example, to the terminal or the RAN network element), where the cause is that the first information is accepted, and a connection is deactivated, released, or suspended (for example, accepting a service reject request).

Further, rejecting activating, rejecting establishing, or rejecting resuming a connection between the terminal and the first network includes at least one of the following: returning a service reject to the terminal, returning an RRC setup reject to the terminal, returning an RRC resume reject to the terminal, and returning, to the RAN network element, a connection resume reject (for example, an S1 resume reject or N2 resume reject) specific to the UE between the RAN network element and the CN network element.

Further, a cause for the reject may be one of the following: a cause for service reject, a cause for RRC setup reject, a cause for RRC resume reject, and a cause for connection resume reject specific to the UE between the RAN network element and the CN network element.

In an implementation, the first CN network element determines to perform the first operation according to the obtained first NAS message and/or first indication information.

In an implementation, the operation of kipping transmitting, to the terminal, data specific to the terminal includes: when other data specific to the terminal arrives or is generated subsequently, the first network does not transmit the data specific to the terminal according to the previously received indication of skipping transmitting data specific to the terminal.

In an implementation, the operation of kipping transmitting, to the terminal, user-plane data specific to the terminal includes: when other user-plane data specific to the terminal arrives or is generated subsequently, the first network does not transmit the user-plane data specific to the terminal according to a previously received indication of skipping transmitting user-plane data specific to the terminal.

In an implementation, the first CN network element returns a data transfer failure notification (such as an N1N2 data transfer notification or a downlink data transfer failure notification) to the second CN network element (for example, an SMF or an SGW), and the data transfer failure notification includes at least one of the following:
- a data transfer failure cause, where the data transfer failure cause is that the terminal does not transmit data, the terminal does not respond (for example, UE No Response), the service is rejected (Service Denied), or the terminal is unreachable;
- a request for caching data specific to the terminal, and/or valid time information of data caching;
- a request for discarding data specific to the terminal, and/or valid time information of data discarding;
- a request for no longer transmitting a data notification (for example, a downlink data notification), and/or valid time information for no longer transmitting a data notification; and
- a request for no longer transmitting a data notification within a period of time indicated by the valid time information of data caching or the valid time information of data discarding.

(1) In at least one embodiment of the present invention, before step 21, the method may further include:
initiating a paging to the terminal.

In this case, optionally, the data specific to the terminal is: data that is specific to the terminal and that triggers the paging. Optionally, the control-plane data specific to the terminal is: control-plane data that is specific to the terminal and that triggers the paging. Optionally, the user-plane data specific to the terminal is: user-plane data that is specific to the terminal and that triggers the paging.

It is easy to understand that, in this case, the related operation of skipping transmitting, to the terminal, data specific to the terminal is: skipping transmitting, to the terminal, the data that is specific to the terminal and that triggers the paging. In an implementation, when other data specific to the terminal arrives or is waiting subsequently, the first network (for example, the second communications device) can still page the terminal, and the terminal can still respond to the paging to determine whether the data is to be transmitted and return the first information and/or the first message.

(2) In at least one embodiment of the present invention, optionally, the data specific to the terminal is: all data specific to the terminal.

Optionally, the control-plane data specific to the terminal is: all control-plane data specific to the terminal.

Optionally, the user-plane data specific to the terminal is: all user-plane data specific to the terminal.

It is easy to understand that, in this case, the related operation of skipping transmitting data specific to the terminal is: skipping transmitting all the data specific to the terminal. In an implementation, all data of the terminal is all existing and future data specific to the terminal. When other data specific to the terminal arrives or is generated subsequently, the first network (for example, the second communications device) determines, according to the previously received first information and/or the first message, whether to transmit the data to the terminal and whether to page the terminal again. For example, in a case that the terminal indicates not transmitting data specific to the terminal and the terminal is in a non-connected state, the first network (for example, the second communications device) may not trigger paging the terminal when the data specific to the terminal arrives. After the terminal lifts a limitation of not transmitting data specific to the terminal (for example, indicating transmitting data specific to the terminal), when the terminal is in a non-connected state and the data specific to the terminal arrives, the first network (for example, the second communications device) may trigger paging the terminal.

(3) In at least one embodiment of the present invention, optionally, the data specific to the terminal is: all data specific to the terminal within a period of time indicated by the first valid time information.

Optionally, the control-plane data specific to the terminal is: all control-plane data specific to the terminal within a period of time indicated by the first valid time information.

Optionally, the user-plane data specific to the terminal is: all user-plane data specific to the terminal within a period of time indicated by the first valid time information.

It is easy to understand that, in this case, the related operation, of skipping transmitting, to the terminal, data specific to the terminal is: skipping transmitting, to the terminal, all data specific to the terminal within a period of time indicated by the first valid time information. In an implementation, the first network (for example, the second communications device) determines, according to the previously received first information and/or first message, whether to transmit data to the terminal and whether to page the terminal again. For example, if the terminal indicates not transmitting data within a specific period of time, when the terminal is in a non-connected state and data specific to the terminal arrives within the period of time, the first network may not trigger paging the terminal. After the period of time elapses, when the terminal is in a non-connected state and the data specific to the terminal arrives, the first network may trigger paging the terminal.
(1) In an implementation, the operation of skipping transmitting, to the terminal, data specific to the terminal may include one of the following:
   skipping transmitting, to the terminal, data that is specific to the terminal and that triggers paging;
   skipping transmitting, to the terminal, all data specific to the terminal;
   indicating not transmitting all data of the terminal within a valid period of time, where the valid period of time is a valid period of time indicated by the valid time information for not transmitting data specific to the terminal;
   skipping transmitting, to the terminal, control-plane data that is specific to the terminal and that triggers the paging;
   skipping transmitting, to the terminal, all control-plane data specific to the terminal;
   skipping transmitting, to the terminal, all control-plane data specific to the terminal within a valid period of time, where the valid period of time is a valid period of time indicated by the valid time information for not transmitting data (for example, control-plane data) specific to the terminal;
   skipping transmitting, to the terminal, user-plane data that is specific to the terminal and that triggers the paging;
   skipping transmitting, to the terminal, all user-plane data of the terminal; and
   skipping transmitting, to the terminal, all user-plane data of the terminal within a valid period of time, where the valid period of time is a valid period of time indicated by the valid time information for not transmitting data (for example, user-plane data) specific to the terminal.
(2) In an implementation, the operation of caching data specific to the terminal may include one of the following:
   caching data that is specific to the terminal and that triggers paging;
   caching all data specific to the terminal;
   caching all data specific to the terminal within a valid period of time, where the valid period of time is a valid period of time indicated by the valid time information for caching data specific to the terminal;
   caching control-plane data that is specific to the terminal and that triggers paging;
   caching all control-plane data specific to the terminal;
   caching all control-plane data specific to the terminal within a valid period of time, where the valid period of time is a valid period of time indicated by the valid time information for caching data (for example, control-plane data) specific to the terminal;
   caching user-plane data that is specific to the terminal and that triggers paging;
   caching all user-plane data specific to the terminal; and
   caching all user-plane data specific to the terminal within a valid period of time, where the valid period of time is a valid period of time indicated by the valid time information for caching data (for example, user-plane data) specific to the terminal.
(3) In an implementation, the operation of discarding data specific to the terminal may include one of the following:
   discarding data that is specific to the terminal and that triggers paging;
   discarding all data specific to the terminal;
   requesting to discard all data of the terminal within a valid period of time, where the valid period of time is a valid period of time indicated by the valid time information for discarding data specific to the terminal;
   discarding control-plane data that is specific to the terminal and that triggers paging;
   discarding all control-plane data specific to the terminal;
   discarding all control-plane data specific to the terminal within a valid period of time, where the valid period of time is a valid period of time indicated by the valid time information for discarding data (for example, control-plane data) specific to the terminal;
   discarding user-plane data that is specific to the terminal and that triggers paging;
   discarding all user-plane data specific to the terminal; and
   discarding all user-plane data specific to the terminal within a valid period of time, where the valid period of time is a valid period of time indicated by the valid time information for discarding data (for example, user-plane data) specific to the terminal.

In an implementation, when data specific to the terminal arrives or is waiting, and the terminal is in a non-connected state, the operation of skipping triggering paging the terminal includes one of the following:
when the control-plane data specific to the terminal arrives or is waiting, and the terminal is in the non-connected state, skipping triggering paging the terminal; and
when the user-plane data specific to the terminal arrives or is waiting, and the terminal is in the non-connected state, skipping triggering paging the terminal.

It is easy to understand that, in this embodiment, when the terminal (such as a multi-card terminal) receives a paging from the first network and determines not to receive data specific to the terminal from the first network, the terminal still responds to the paging, and through the paging response, indicates not transmitting (for example, not receiving) the data. In this way, the first network does not need to establish a user-plane resource for the data tunnel specific to the terminal, neither needs to transmit data to the terminal, so that the terminal can quickly return to a non-connected state (such as an idle state or an inactive state). In addition, and the first network can receive a paging response from the terminal and stops paging. This reduces paging resources, and avoids ineffective resource overheads such as paging resources, user-plane resource allocation, and data scheduling.

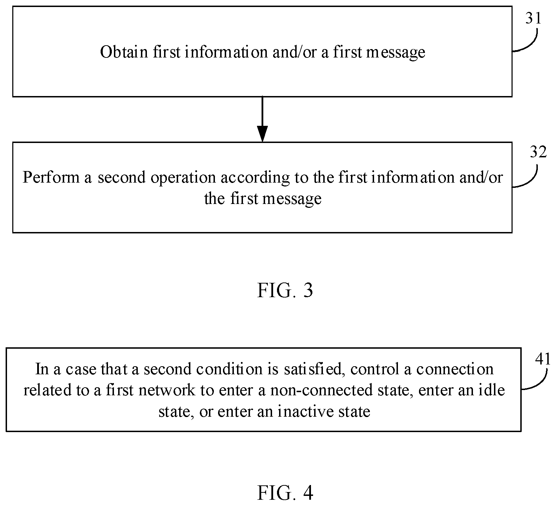

Referring to FIG. 3, an embodiment of the present invention provides a connection processing method, applied to a third communications device. The third communications device includes but is not limited to: a RAN network element. As shown in FIG. 3, the method includes the following steps.

Step 31: Obtain first information and/or a first message.

Step 32: Perform a second operation according to the first information and/or the first message.

The RAN network element may be a RAN network element of a first network.

The first message may include any one of the following: a first NAS message, a first RRC message, a service request message, an RRC resume request message, an RRC resume complete message, an RRC setup message, an RRC connection setup complete message, a registration request message, an attach request message, and a TAU request message.

The first information may include at least one of the following: first indication information, first cause information, MICO indication information, PSM indication information, and first valid time information.

The first valid time information includes at least one of the following: valid time information of the first indication information, valid time information of the first cause information, valid time information of the MICO indication information, and valid time information of the PSM indication information.

Optionally, the first RRC message is specifically described in the embodiment of FIG. 1, and details are not described herein again.

Optionally, the first indication information is specifically described in the embodiment of FIG. 1, and details are not described herein again.

Optionally, the first cause information is specifically described in the embodiment of FIG. 1, and details are not described herein again.

Optionally, the first valid time information is specifically described in the embodiment of FIG. 1, and details are not described herein again.

In an implementation, the first information and/or the first message is obtained from at least one of the following: a terminal or a CN network element.

Optionally, the second operation may include at least one of the following:
sending the obtained first information and/or first message to a CN network element;
skipping activating, skipping establishing, or skipping resuming a user-plane resource for a data tunnel (for example, a DRB) specific to a terminal;
skipping transmitting, to the terminal, data (control-plane data and/or user-plane data) specific to the terminal;
skipping transmitting, to the terminal, user-plane data specific to the terminal, but transmitting, to the terminal, control-plane data specific to the terminal;
discarding or continuing to cache data (control-plane data and/or user-plane data) specific to the terminal;
requesting the CN network element (for example, an AMF or an MME) to release or suspend a connection specific to the terminal;
deactivating, releasing, or suspending an RRC connection specific to the terminal;
rejecting activating, rejecting establishing, or rejecting resuming an RRC connection between the terminal and a first network;
returning a reject cause (for example, to the terminal), where the cause is that the first information is accepted, a connection is deactivated, a connection is released, or a connection is suspended (for example, the first indication information is accepted, rejecting activating the connection between the terminal and the first network is accepted, or skipping transmitting data specific to the terminal is accepted, or a service reject request is accepted); and
sending an RRC connection release message to the terminal, where the RRC connection release message includes an RRC connection suspend indication.

In an implementation, the operation of requesting the CN network element to release or suspend a connection specific to the terminal includes at least one of the following:
sending a terminal context release request to the CN network element (for example, an AMF or an MME); and
sending a terminal release cause to the CN network element (for example, an AMF or an MME), where the terminal release cause is that the terminal is unreachable or the data is unable to reach the terminal.

Further, rejecting activating, rejecting establishing, or rejecting resuming an RRC connection between the terminal and the first network includes at least one of the following: returning a service reject to the terminal, returning an RRC setup reject to the terminal, returning an RRC resume reject to the terminal, and returning, to the RAN network element, a connection resume reject (for example, an S1 resume reject or N2 resume reject) specific to the UE between the RAN network element and the CN network element.

Further, a cause for the reject may be one of the following: a cause for service reject, a cause for RRC setup reject, a cause for RRC resume reject, and a cause for connection resume reject specific to the UE between the RAN network element and the CN network element.

In an implementation, the data specific to the terminal is data (control-plane data and/or user-plane data) that triggers current paging.

In an implementation, the RAN network element discards or caches only the data that triggers current paging. When other data arrives or is waiting, paging is still triggered to the terminal. In another implementation, the CN network element discards or caches all the data specific to the terminal. When other data arrives or is waiting, the terminal is no longer paged. In the second implementation, the terminal may negotiate with the first network by using a MICO indication or a PSM indication.

(1) In at least one embodiment of the present invention, before step 31, the method may further include:
initiating a RAN paging to the terminal.

In this case, optionally, the data specific to the terminal is: data that is specific to the terminal and that triggers the RAN paging. Optionally, the control-plane data specific to the terminal is: control-plane data that is specific to the terminal and that triggers the RAN paging. Optionally, the user-plane data specific to the terminal is: user-plane data that is specific to the terminal and that triggers the RAN paging.

It is easy to understand that, in this case, the related operation of skipping transmitting data specific to a terminal is: skipping transmitting, to the terminal, the data that is specific to the terminal and that triggers the RAN paging. In an implementation, when other data specific to the terminal arrives or is waiting subsequently (for example, new NAS data is generated), the first network (for example, the third communications device) can still trigger a RAN paging to the terminal, and the terminal can still respond to the RAN paging to determine whether the data is to be transmitted and return the first information and/or the first message.

(2) In at least one embodiment of the present invention, optionally, the data specific to the terminal is: all data specific to the terminal.

Optionally, the control-plane data specific to the terminal is: all control-plane data specific to the terminal.

Optionally, the user-plane data specific to the terminal is: all user-plane data specific to the terminal.

It is easy to understand that, in this case, the related operation of skipping transmitting, to the terminal, data specific to the terminal is: skipping transmitting, to the terminal, all the data specific to the terminal. In an implementation, all the data of the terminal is all existing and future data specific to the terminal. When other data specific to the terminal arrives or is generated subsequently (for example, new NAS data is generated), the first network (for example, the third communications device) determines, according to the previously received first information and/or the first message, whether to transmit the data to the terminal and whether to page the terminal again. For example, when the terminal indicates not transmitting data specific to the terminal and the terminal is in a non-connected state, and the data specific to the terminal arrives or is waiting, the first network (for example, the third communications device) may not trigger paging the terminal. After the terminal lifts a limitation of not transmitting data specific to the terminal (for example, indicating transmitting data specific to the terminal), when the terminal is in a non-connected state and the data specific to the terminal arrives or is waiting, the first network (for example, the third communications device) may trigger paging the terminal.

(3) In at least one embodiment of the present invention, optionally, the data specific to the terminal is: all data specific to the terminal within a period of time indicated by the first valid time information.

Optionally, the control-plane data specific to the terminal is: all control-plane data specific to the terminal within a period of time indicated by the first valid time information.

Optionally, the user-plane data specific to the terminal is: all user-plane data specific to the terminal within a period of time indicated by the first valid time information.

It is easy to understand that, in this case, the related operation of skipping transmitting data specific to the terminal is: skipping transmitting all data specific to the terminal within a period of time indicated by the first valid time information. In an implementation, the first network (for example, the third communications device) determines, according to the previously received first information and/or first message, whether to transmit data to the terminal and whether to page the terminal again. For example, if the terminal indicates not transmitting data within a specific period of time, when the terminal is in a non-connected state and data specific to the terminal arrives or is waiting within the period of time, the first network may not trigger paging the terminal. After the period of time elapses, when the terminal is in a non-connected state and the data specific to the terminal arrives or is waiting, the first network may trigger paging the terminal.

In an implementation, the operation of skipping transmitting, to the terminal, data specific to the terminal may be the same as that specifically described in the embodiment of FIG. 2.

In an implementation, the operation of caching data specific to the terminal may be the same as that specifically described in the embodiment of FIG. 2.

In an implementation, the operation of discarding data specific to the terminal may be the same as that specifically described in the embodiment of FIG. 2.

It is easy to understand that, in this embodiment, when the terminal (such as a multi-card terminal) receives a paging from the first network and determines not to receive data specific to the terminal from the first network, the terminal still responds to the paging, and through the paging response, indicates not transmitting (for example, not receiving) the data. In this way, the first network does not need to establish a user-plane resource for the data tunnel specific to the terminal, neither needs to transmit data to the terminal, so that the terminal can quickly return to a non-connected state (such as an idle state or an inactive state). In addition, and the first network can receive a paging response from the terminal and stops paging. This reduces paging resources, and avoids ineffective resource overheads such as paging resources, user-plane resource allocation, and data scheduling.

Referring to FIG. 4, an embodiment of the present invention provides a connection processing method, applied to a fourth communications device. The fourth communications device includes but is not limited to: a terminal. As shown in FIG. 4, the method includes the following step.

Step 41: In a case that a second condition is satisfied, control a connection related to a first network to enter a non-connected state, enter an idle state, or enter an inactive state.

The second condition includes any one of the following:
at least one of a first message and first information is sent to a first-network network element;
at least one of the first message and the first information is sent to a first-network network element, and authentication with the first network has been completed;
a second NAS message is received from the first-network network element;
a service request accept message is received from the first-network network element;
a service request accept message is received from the first-network network element, where the service request accept message includes any one of the following: indication information for connection release, indication information for connection suspension, and indication information for the first information being accepted;
a service reject message, an RRC setup reject message, or an RRC resume reject message is received from the first-network network element; and
a reject cause is received from the first-network network element, where the reject cause is any one of the following: a connection is deactivated, a connection is released, a connection is suspended, and the first information is accepted (for example, the first indication information is accepted, rejecting activating the connection between the terminal and the first network is accepted, or skipping transmitting data specific to the terminal is accepted, or a service reject request is accepted).

Further, a cause for the reject may be one of the following: a cause for service reject, a cause for RRC setup reject, a cause for RRC resume reject, and a cause for connection resume reject specific to the UE between the RAN network element and the CN network element.

In an implementation, accepting the first indication information includes at least one of the following: accepting the first indication information and accepting the first cause information.

Optionally, the first message includes any one of the following: a first NAS message, a first RRC message, a service request message, an RRC resume request message, an RRC resume complete message, an RRC setup message, an RRC connection setup complete message, a registration request message, an attach request message, and a TAU request message.

The first information includes at least one of the following: first indication information, first cause information, MICO indication information, PSM indication information, and first valid time information.

The first valid time information includes at least one of the following: valid time information of the first indication information, valid time information of the first cause information, valid time information of the MICO indication information, and valid time information of the PSM indication information.

Optionally, the second NAS message is a response message to the first NAS message.

In an implementation, the first message and/or the first information is used to respond to paging and to indicate not receiving data specific to the UE.

Optionally, the first RRC message is specifically described in the embodiment of FIG. 1, and details are not described herein again.

Optionally, the first indication information is specifically described in the embodiment of FIG. 1, and details are not described herein again.

Optionally, the first cause information is specifically described in the embodiment of FIG. 1, and details are not described herein again.

Optionally, the first valid time information is specifically described in the embodiment of FIG. 1, and details are not described herein again.

It can be understood that this embodiment can facilitate returning to the non-connected state by the terminal. For example, a multi-card terminal can quickly switch back to a second network, without interrupting a service with the second network.

The following describes the connection processing method in the embodiments of the present invention with reference to specific application scenarios.

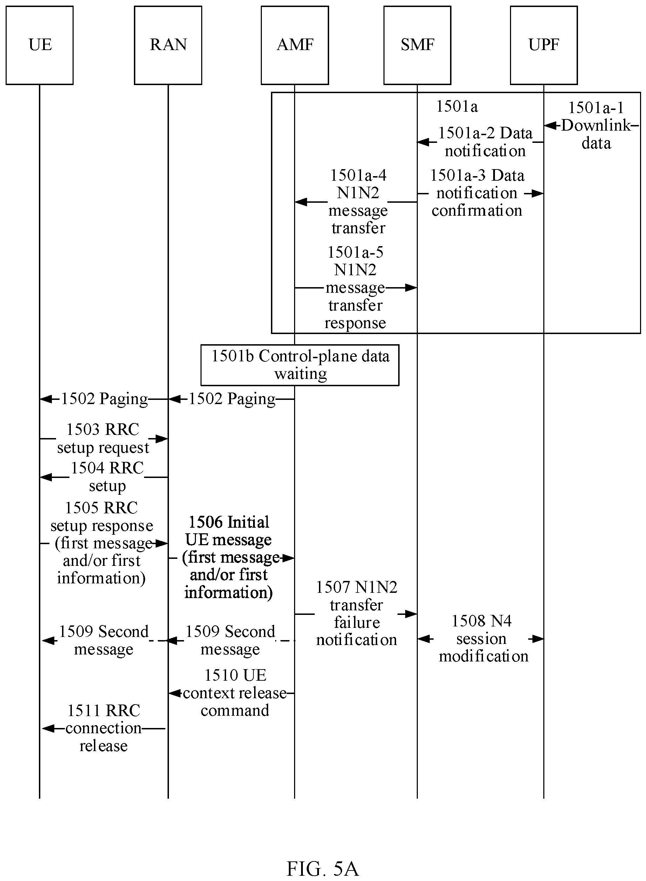

Application scenario 1A:
The application scenario 1A of the embodiments of the present invention mainly describes a process of paging UE by a CN network element in a 5GS. Referring to FIG. 5A, the following steps are included:
Step 1501a: After receiving downlink data, a UPF sends a data notification to an SMF. After receiving the data notification, the SMF returns a data notification confirmation to the UPF. The SMF sends a downlink data notification (DL Data Notification) specific to the UE to an AMF. The data notification specific to the UE may be transmitted by using an N1N2 message transfer message. The AMF returns an N1N2 message transfer response to the SMF.
Step 1501b: The AMF has pending control-plane data, for example, generating a NAS data packet specific to the UE.

Optionally, the AMF may receive signaling (for example, SM or LCS) or data (for example, CP CIOT) sent by a third CN network element (for example, an SMF, a PCF, or a UDM), and generates a NAS data packet.

Step 1502: The UE is in an idle state, and the AMF pages the UE through a RAN network element.

Step 1503: The UE receives the paging and sends an RRC setup request message to the RAN network element.

Optionally, the RRC setup request message includes an RRC setup cause. The RRC setup cause is first cause information, as described in the embodiment of FIG. 1. For example, the first cause information may be used for at least one of the following: (1) responding to paging, and indicating not establishing a user-plane resource for a data tunnel specific to the UE, or indicating merely establishing a control-plane resource; (2) indicating not transmitting data specific to the UE; and (3) indicating that the UE is not to receive data.

After step 1503 is completed, the UE may directly return to the idle state, as described in the embodiment of FIG. 4.

Step 1504: The RAN network element sends an RRC connection setup message to the UE.

Step 1505: The UE sends an RRC connection setup complete message to the RAN network element. The RRC connection setup complete message includes a NAS data packet or includes no NAS data packet. When a NAS data packet is included, the NAS data packet may be a first message. The first message has been described in the embodiment of FIG. 1. The RRC connection setup complete message may include first information. The first information has been described in the embodiment of FIG. 1.

Optionally, in a case that a first condition is satisfied, the UE sends the first message and/or the first information. Details are described in the embodiment of FIG. 1. For example, the UE may perform one of the following:
(1) sending a first NAS message to the AMF (details are described in the embodiment of FIG. 1), where, for example, the first NAS message may be used for at least one of the following: 1) responding to the paging, and indicating not receiving (for example, all) data specific to the UE; 2) requesting not to establish a user-plane resource for a data tunnel specific to the UE; and 3) requesting to cache or discard (for example, all) data specific to the UE;
(2) sending first indication information to the AMF (details are described in the embodiment of FIG. 1), where, for example, the first indication information may be used for at least one of the following: 1) responding to paging, and indicating not establishing a user-plane resource for a data tunnel specific to the UE; and 2) requesting to cache or discard all data specific to the UE, including control plane and/or user-plane data; and
(3) sending a service request message to the AMF, where the service request message includes first indication information (the first indication information may be a service type for the service request); for example, the first indication information is used for at least one of the following: 1) responding to the paging and indicating not establishing a user-plane resource for a data tunnel specific to the UE; 2) requesting to cache or discard all data specific to the UE; and 3) indicating not receiving data specific to the UE.

Optionally, the first condition is (specifically described in the embodiment of FIG. 1), for example, the first condition may be at least one of the following:
paging from a first network has been received;
it is determined that a connection to the first network remains deactivated, released, or suspended;
it is determined to discard data specific to the terminal from the first network;
it is determined to receive only control-plane data that is specific to the terminal and that comes from the first network, and it is determined to discard user-plane data that is specific to the terminal and that comes from the first network;
it is determined not to immediately receive data that is specific to the terminal and that comes from the first network;
it is determined to request the first network to continue to cache data specific to the terminal;
it is determined not to activate, establish, or resume a user-plane resource for a data tunnel specific to the terminal with the first network; and
it is determined not to perform data transmission with the first network.

Further, the first NAS message or the service request message may include MICO indication information. With such MICO indication, when data specific to the UE arrives or is waiting subsequently, the first network may be allowed to cache all data specific to the UE, but not to page the UE.

In an implementation, the data specific to the UE is (for example, all) data that triggers current paging.

Step 1506: The RAN network element sends an initial UE message to the AMF. The initial UE message includes the NAS data packet received from the UE.

Optionally, the AMF determines to perform a first operation according to the first NAS message and/or first indication information that is received. The first operation may be as described in the embodiment shown in FIG. 2, and details are not described herein again.

Step 1507: The AMF sends an N1N2 data transfer failure notification message to the SMF. The N1N2 data failure notification message may include: a failure cause being that data is unable to the UE, and valid time information for requesting to cache data.

Step 1508: The SMF sends an N4 session modification notification to the UPF.

In an implementation, step 1509 is then performed.

In another implementation, step 1510 is directly performed. For example, when the NAS data packet is not included in step 1505, step 1509 may be directly performed according to the first cause information.

Step 1509: The AMF sends a second message to the UE through the RAN network element. The second message may include one of the following: a second NAS message, a service accept message, and a service reject message.

Optionally, when the service request message includes MICO indication information, the service accept message may include the MICO indication information, for indicating accepting the MICO.

Optionally, after receiving a first NAS response message (or a first NAS request accept message), the UE controls a connection to the first network to enter an idle state. Details are described in the embodiment of FIG. 4.

Step 1510: The AMF sends a UE context release command to the RAN network element.

Step 1511: The RAN network element sends an RRC connection release message to the UE to release or suspend an RRC connection of the UE.

### Application scenario 1B:

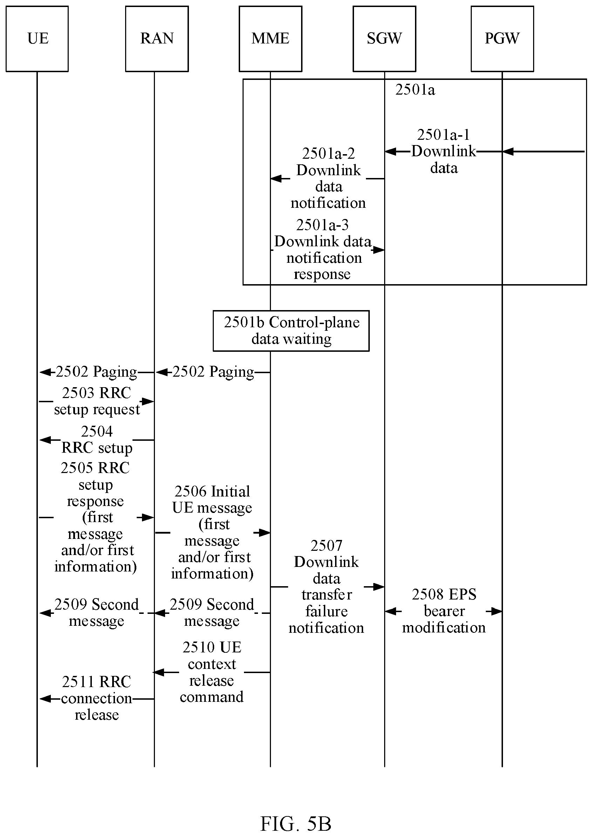

The application scenario 1B of the embodiments of the present invention mainly describes a process of paging UE by a CN network element in an EPS. Referring to FIG. 5B, the following steps are included.

Step 2501a: After receiving downlink data, a PGW sends the downlink data to an SGW, and after receiving the downlink data, the SGW sends, to an MME, a downlink data notification (DL Data Notification) specific to the UE. The MME returns a downlink data notification response to the SGW.

Step 2501b: The MME has pending control-plane data, for example, generating a NAS data packet specific to the UE.

Optionally, the MME may receive signaling or data (for example, CP CIOT) sent by a third CN network element (for example, an SGW, a PCRF, or an HSS), and generates a NAS data packet.

Step 2502: The UE is in an idle state, and the MME pages the UE through a RAN network element.

Step 2503: The UE receives the paging and sends an RRC setup request message to the RAN network element.

Optionally, the RRC setup request message includes an RRC setup cause. The RRC setup cause is first cause information, as described in the embodiment of FIG. 1.

After step 2503 is completed, the UE may directly return to the idle state, as described in the embodiment of FIG. 4.

Step 2504: The RAN network element sends an RRC connection setup message to the UE.

Step 2505: The UE sends an RRC connection setup complete message to the RAN network element. The RRC connection setup complete message includes a NAS data packet or includes no NAS data packet. The NAS data packet is a first message. The first message has been described in the embodiment of FIG. 1. The RRC connection setup complete message may include first information. The first information has been described in the embodiment of FIG. 1.

Optionally, in a case that a first condition is satisfied, the UE sends the first message and/or the first information. Details are described in the embodiment of FIG. 1. For example, the UE may perform one of the following:
(1) sending a first NAS message to the MME (details are described in the embodiment of FIG. 1), where, for example, the first NAS message may be used for at least one of the following: 1) responding to the paging, and indicating not receiving (for example, all) data specific to the UE; 2) requesting not to establish a user-plane resource for a data tunnel specific to the UE; and 3) requesting to cache or discard (for example, all) data specific to the UE.
(2) sending first indication information to the MME (details are described in the embodiment of FIG. 1), where, for example, the first indication information may be used for at least one of the following: 1) responding to paging, and indicating not establishing a user-plane resource for a data tunnel specific to the UE; and 2) requesting to cache or discard all data specific to the UE, including control plane and/or user-plane data; and
(3) sending a service request message to the MME, where the service request message includes first indication information (the first indication information may be a service type for the service request); for example, the first indication information is used for at least one of the following: 1) responding to the paging and indicating not establishing a user-plane resource for a data tunnel specific to the UE; 2) requesting to cache or discard all data specific to the UE; and 3) indicating not receiving data specific to the UE.

Optionally, the first condition (has been described in the embodiment of FIG. 1).

Further, the first NAS message or the service request message may include PSM indication information. With the PSM indication, when data specific to the UE arrives or is waiting subsequently, the first network may be allowed to cache all data specific to the UE, but not to page the UE.

Step 2506: The RAN network element sends an initial UE message to the MME. The initial UE message includes the NAS data packet received from the UE.

Optionally, the MME determines to perform a first operation according to the first NAS message and/or first indication information that is received. The first operation may be as described in the embodiment shown in FIG. 2, and details are not described herein again.

Step 2507: The MME sends an N1N2 data transfer failure notification message to the SGW. The N1N2 data failure notification message may include: a failure cause being that data is unable to the UE, and valid time information for requesting to cache data.

Step 2508: The SGW sends an N4 session modification notification to the UPF.

In an implementation, step 2509 is performed, and in another implementation, step 2510 is directly performed. In an implementation, step 2509 is performed.

In another implementation, step 2510 is directly performed. For example, when the NAS data packet is not included in step 2505, step 2509 may be directly performed according to the first cause information.

Step 2509: The MME sends a second message to the UE through the RAN network element. The second message may include one of the following: a second NAS message, a service accept message, and a service reject message.

Optionally, when the service request message includes PSM indication information, the service accept message may include the PSM indication information, for indicating accepting the PSM.

Optionally, after receiving a first NAS response message (or a first NAS request accept message), the UE controls a connection to the first network to enter an idle state. Details are described in the embodiment of FIG. 4.

Step 2510: The MME sends a UE context release command to the RAN network element.

Step 2511: The RAN network element sends an RRC connection release message to the UE to release or suspend an RRC connection of the UE.

### Application scenario 2:

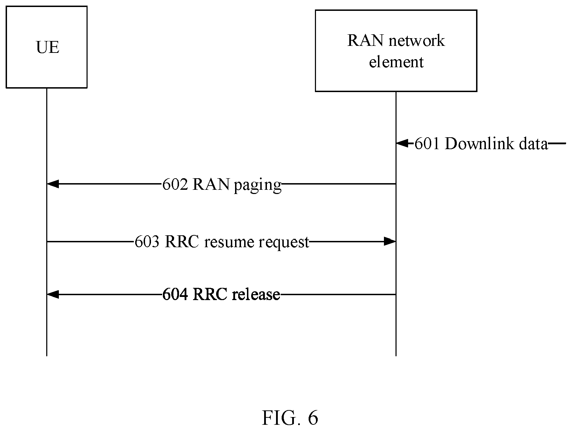

The application scenario 2 of the embodiments of the present invention mainly describes a process of paging UE by a RAN network element in a 5GS. Referring to FIG. 6, the following steps are included.

Step 601: The UE is in an RRC inactive state, and the RAN network element receives user-plane data specific to the UE and/or a NAS data packet (that is, downlink data).

Step 602: The RAN network element sends a RAN paging to the UE.

Step 603: After receiving the RAN paging sent by the RAN network element, the UE sends an RRC resume request to the RAN network element.

Optionally, in a case that a first condition is satisfied, the RRC resume request includes an RRC resume cause. The RRC resume cause is the first cause information, and may be used for at least one of the following: (1) responding to paging, and indicating not establishing a user-plane resource for a data tunnel specific to the UE, or indicating merely establishing a control-plane resource; (2) indicating a suspend request or release request; and (3) indicating not receiving (for example, all) data specific to the UE.

Further, when the first cause information indicates not receiving all data specific to the UE, the first cause information may be divided into: second cause information that indicates not receiving downlink control-plane data, and third cause information that indicates not receiving downlink user-plane data.

Optionally, the first condition may be as described in the foregoing application scenario 1. For example, the UE determines to discard all data coming from the first network, including control-plane data and/or user-plane data.

Step 604: The RAN network element performs a second operation according to the first cause information. The second operation includes at least one of the following:
sending the obtained first information and/or first message to a CN network element;
skipping activating, skipping establishing, or skipping resuming a user-plane resource for a data tunnel (for example, a DRB) specific to UE;
skipping transmitting, to the UE, data specific to the UE, including control-plane data and/or user-plane data;
discarding or continuing to cache data specific to the UE, including control-plane data and/or user-plane data;
requesting the CN network element to release or suspend a connection specific to the UE; and
sending an RRC connection release message to the UE, where the RRC connection release message includes an RRC connection suspend indication.

In an implementation, the data specific to the UE is (for example, all) data that triggers current paging. In an implementation, the RAN network element discards or caches only the data that triggers current paging. When other data arrives or is waiting, paging is still triggered to the UE. In another implementation, the CN network element discards or caches all the data specific to the UE. When other data arrives or is waiting, the UE is no longer paged. In the second implementation, the UE may negotiate with the first network by using a MICO indication.

### Application scenario 3A:

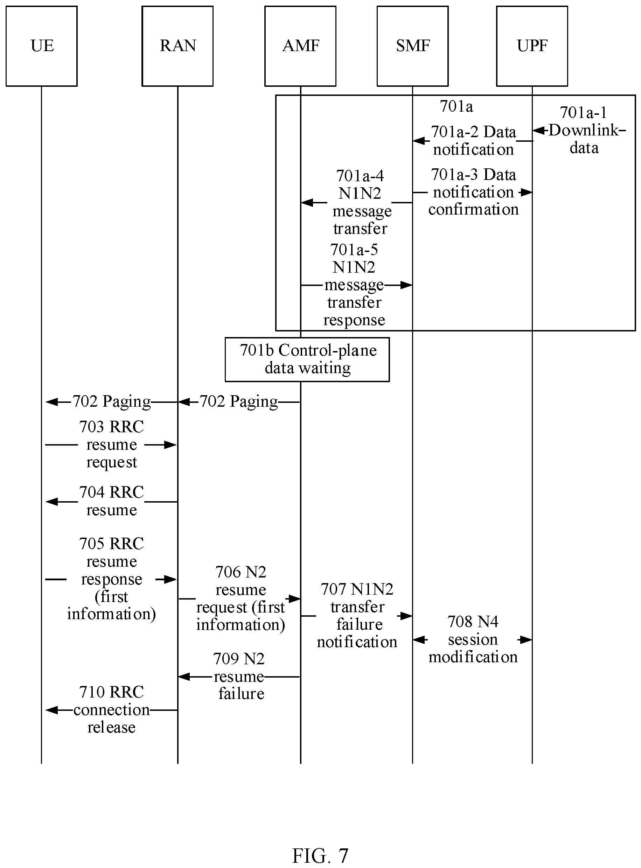

The application scenario 3A in the embodiments of the present invention mainly describes a process of paging UE (whose state is CM-IDLE with Suspend) by a CN network element in a 5GS, and after an RRC connection of the UE is resumed, requesting an AMF by a RAN network element by using an N2 resume request to resume the connection. Referring to FIG. 7, the following steps are included.

Step 701a is the same as that described in step 1501a of FIG. 5A, and details are not described herein again.

Step 702a is the same as that described in step 1501b of FIG. 5A, and details are not described herein again.

Step 702: The UE is in a CM-IDLE with Suspend state, and the AMF pages the UE through the RAN network element.

Step 703: The UE receives the paging and sends an RRC resume request message to the RAN network element.

Optionally, the RRC setup request message includes an RRC resume cause. The RRC resume cause is first cause information, as described in the foregoing application scenario 1.

Step 704: The RAN network element sends an RRC connection resume message to the UE.

Step 705: The UE sends an RRC connection resume complete message to the RAN network element.

Optionally, in a case that a first condition is satisfied, the UE sends first indication information to the RAN network element. The first indication information may be as described in the foregoing application scenario 1. The first condition may be as described in the foregoing application scenario 1.

In an implementation, the first indication information may be included in the RRC resume request message or the RRC connection resume complete message.

Optionally, the RAN network element may perform a second operation (details are described in the embodiment of FIG. 3). For example, the second operation may include one of the following:
(1) the RAN network element sends, to the AMF, the first indication information and/or first cause information received from the UE; and
(2) the RAN sends a UE context release request to the AMF, where a release cause is that data is unable to reach the UE.

In an implementation, the RAN network element sends an N2 resume request to the AMF, where the N2 resume request includes the first indication information and/or first cause information.

Further, the RRC setup request message or the RRC setup complete message may include MICO indication information or PSM indication information. With such MICO indication or PSM indication, when data specific to the UE arrives or is waiting subsequently, the first network may be allowed to cache all data specific to the UE, but not to page the UE.

Step 706: The RAN network element sends an N2 resume request message to the AMF. The N2 resume request message includes the first indication information and/or first cause information.

Optionally, the AMF determines, according to the first indication information, to perform a first operation. The first operation may be as described in the embodiment shown in FIG. 2, and details are not described herein again.

Steps 707 and 708 are the same as steps 1507 and 1508 in FIG. 5A, and details are not described herein again.

Step 709: The AMF sends an N2 resume failure message to the RAN network element.

Step 710: The RAN network element sends an RRC connection release message to the UE to release or suspend the RRC connection of the UE.

### Application scenario 3B:

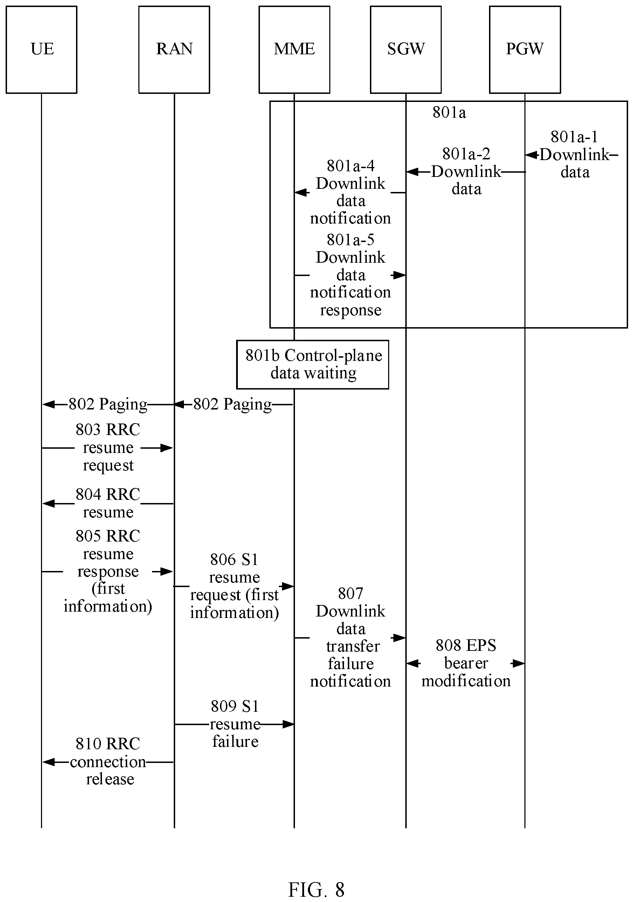

The application scenario 3B in the embodiments of the present invention mainly describes a process of paging UE (whose state is CM-IDLE with Suspend) by a CN network element in an EPS, and after an RRC connection of the UE is resumed, requesting an MME by a RAN network element by using an N2 resume request to resume the connection. Referring to FIG. 8, the following steps are included.

Step 801a is the same as that described in step 2501a of FIG. 5B, and details are not described herein again.

Step 802a is the same as that described in step 2501b of FIG. 5B, and details are not described herein again.

Step 802: The UE is in a CM-IDLE with Suspend state, and the MME pages the UE through the RAN network element.

Step 803: The UE receives the paging and sends an RRC resume request message to the RAN network element.

Optionally, the RRC setup request message includes an RRC resume cause. The RRC resume cause is first cause information, as described in the foregoing application scenario 1.

Step 804: The RAN network element sends an RRC connection resume message to the UE.

Step 805: The UE sends an RRC connection resume complete message to the RAN network element.

Optionally, in a case that a first condition is satisfied, the UE sends first indication information to the RAN network element. The first indication information may be as described in the foregoing application scenario 1. The first condition may be as described in the foregoing application scenario 1.

In an implementation, the first indication information may be included in the RRC resume request message or the RRC connection resume complete message.

Optionally, the RAN network element may perform a second operation (details are described in the embodiment of FIG. 3). For example, the second operation may include one of the following:
(1) The RAN network element sends, to the MME, the first indication information and/or first cause information received from the UE.
(2) the RAN sends a UE context release request to the MME, where a release cause is that data is unable to reach the UE.

In an implementation, the RAN network element sends an N2 resume request to the MME, where the N2 resume request includes the first indication information and/or first cause information.

Further, the RRC setup request message or the RRC setup complete message may include MICO indication information or PSM indication information. With such MICO indication or PSM indication, when data specific to the UE arrives or is waiting subsequently, the first network may be allowed to cache all data specific to the UE, but not to page the UE.

Step 806: The RAN network element sends an S1 resume request message to the MME. The S1 resume request message includes the first indication information and/or first cause information.

Optionally, the MME determines, according to the first indication information, to perform a first operation. The first operation may be as described in the embodiment shown in FIG. 2, and details are not described herein again.

Steps 807 and 808 are the same as steps 2507 and 2508 in FIG. 5B, and details are not described herein again.

Step 809: The MME sends an S1 resume failure message to the RAN network element.

Step 810: The RAN network element sends an RRC connection release message to the UE to release or suspend an RRC connection of the UE.

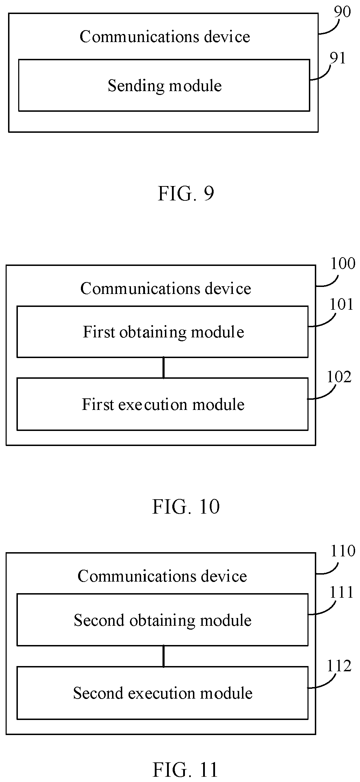

Referring to FIG. 9, an embodiment of this disclosure provides a communications device. The communications device is a first communications device. As shown in FIG. 9, the communications device 90 includes:
a sending module 91, configured to send at least one of a first message and first information; where
the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information; and
the first valid time information includes at least one of the following: valid time information of the first indication information, valid time information of the first cause information, valid time information of the MICO indication information, and valid time information of the PSM indication information.

Optionally, the first NAS message is used for at least one of the following:
responding to paging, and requesting to activate, requesting to establish, or requesting to resume a connection between a terminal and a first network;
indicating not transmitting data specific to a terminal;
requesting not to activate, not to establish, or not to resume a user-plane resource for a data tunnel specific to the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and a first network;
requesting a connection between the terminal and the first network to enter a non-connected state, to enter an idle state, or to enter an inactive state;
requesting to reject activating, reject establishing, or reject resuming a connection between the terminal and the first network;
requesting to return a service reject for a service request of the terminal; and
requesting not to trigger paging the terminal.

Optionally, the first indication information is used for at least one of the following:
indicating a paging response, a connection being established, or a connection being resumed;
indicating not transmitting data specific to a terminal;
requesting not to activate, not to establish, or not to resume a user-plane resource for a data tunnel specific to the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and a first network;
requesting a connection between the terminal and the first network to enter a non-connected state, to enter an idle state, or to enter an inactive state;
requesting to reject activating, reject establishing, or reject resuming a connection between the terminal and the first network;
requesting to return a service reject for a service request of the terminal; and
requesting not to trigger paging the terminal.

Optionally, the first indication information includes at least one of the following: indication information that indicates not transmitting control-plane data, and indication information that indicates not transmitting user-plane data; or
the first indication information includes at least one of the following: indication information that indicates requesting to cache control-plane data specific to a terminal, and indication information that indicates requesting to cache user-plane data specific to the terminal; or
the first indication information includes at least one of the following: indication information that indicates requesting to discard control-plane data specific to the terminal, and indication information that indicates requesting to discard user-plane data specific to the terminal; or
the first indication information includes at least one of the following: indication information indicating that the control-plane data is unable to reach the terminal, and indication information indicating that the user-plane data is unable to reach the terminal; or
the first indication information includes at least one of the following: indication information indicating that the user-plane data is not allowed to trigger paging the terminal, and indication information indicating that the user-plane data is not allowed to trigger paging the terminal.

Optionally, the first indication information is used for at least one of the following:
indicating whether to transmit data specific to a terminal;
indicating whether to request to activate, whether to request to establish, or whether to request to resume a user-plane resource for a data tunnel specific to the terminal;
indicating whether to request to cache data specific to the terminal;
indicating whether to request to discard data specific to the terminal;
indicating whether the terminal is reachable;
indicating whether data is able to reach the terminal;
indicating whether to request to deactivate, release, or suspend a connection between the terminal and the first network;
indicating whether to request a connection between the terminal and the first network to enter a non-connected state, to enter an idle state, or to enter an inactive state;
indicating whether to request to reject activating, whether to request to reject establishing, or whether to request to reject resuming a connection between the terminal and the first network; and
indicating whether to request not to trigger paging the terminal.

Optionally, the first indication information includes at least one of the following: indication information indicating whether to transmit control-plane data, and indication information indicating whether to transmit user-plane data; or
the first indication information includes at least one of the following: indication information indicating whether to request to cache control-plane data specific to a terminal, and indication information indicating whether to request to cache user-plane data specific to the terminal; or
the first indication information includes at least one of the following: indication information indicating whether to request to discard control-plane data specific to a terminal, and indication information indicating whether to request to discard user-plane data specific to the terminal; or
the first indication information includes at least one of the following: indication information indicating whether the control-plane data is able to reach the terminal, and indication information indicating whether the user-plane data is able to reach the terminal; or
the first indication information includes at least one of the following: indication information indicating whether the control-plane data triggers a paging to the terminal, and indication information indicating whether the user-plane data triggers a paging to the terminal.

Optionally, the first cause information is used for at least one of the following:
indicating a paging response, an RRC connection being activated, an RRC connection being established, or an RRC connection being resumed;
indicating not transmitting data specific to a terminal;
requesting not to activate, not to establish, or not to resume a user-plane resource for a data tunnel specific to the terminal;
requesting to establish or resume only a control-plane connection of the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and a first network;
requesting a connection between the terminal and the first network to enter a non-connected state, to enter an idle state, or to enter an inactive state;
requesting to reject activating, reject establishing, or reject resuming a connection between the terminal and the first network; and
requesting not to trigger paging the terminal.

Optionally, the first valid time information includes at least one of the following:
valid time information for not transmitting data specific to a terminal;
valid time information for caching data specific to the terminal;
valid time information for the terminal being unreachable;
valid time information for data being unable to reach the terminal;
valid time information for a connection between the terminal and a first network remaining deactivated, released, or suspended;
valid time information for a connection between the terminal and a first network remaining in an idle state or an inactive state; and
valid time information for not triggering paging the terminal.

Optionally, the sending module 91 is specifically configured to: in a case that a first condition is satisfied, send at least one of the first message and the first information; where
the first condition includes at least one of the following:
   paging from a first network has been received;
   it is determined that a connection to the first network remains deactivated, released, or suspended;
   it is determined to discard data specific to the terminal from the first network;
   it is determined to receive only control-plane data that is specific to the terminal and that comes from the first network, and it is determined to discard user-plane data that is specific to the terminal and that comes from the first network;
   it is determined not to immediately receive data that is specific to the terminal and that comes from the first network;
   it is determined to request the first network to continue to cache data specific to the terminal;
   it is determined not to activate, establish, or resume a user-plane resource for a data tunnel specific to the terminal with the first network; and
   it is determined not to perform data transmission with the first network.

Optionally, the first information is sent in any one of the following messages: a first NAS message, a first RRC message, a service request message, a first RRC message, an RRC setup request message, an RRC setup complete message, an RRC connection resume request message, an RRC connection resume complete message, a connection suspend request, a registration request message, a TAU request message, an attach request message, a connection setup request specific to a terminal between a RAN network element and a CN network element, and a connection resume request specific to the terminal between the RAN network element and the CN network element.

Optionally, the data specific to the terminal includes: control-plane data specific to the terminal and user-plane data specific to the terminal.

In this embodiment, the communications device 90 is capable of implementing the processes implemented in the method embodiment shown in FIG. 1 of the present invention, with the same beneficial effects achieved. To avoid repetition, details are not described herein again.

Referring to FIG. 10, an embodiment of this disclosure provides a communications device. The communications device is a second communications device. As shown in FIG. 10, the communications device 100 includes:
a first obtaining module 101, configured to obtain at least one of a first message and first information; and
a first execution module 102, configured to perform a first operation according to at least one of the first message and the first information that are obtained; where
the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information;
the first valid time information includes at least one of the following: valid time information of the first indication information, valid time information of the first cause information, valid time information of the MICO indication information, and valid time information of the PSM indication information; and
the first operation includes at least one of the following:
   sending the obtained first information and/or first message to a RAN network element;
   skipping activating, skipping establishing, or skipping resuming a user-plane resource for a data tunnel specific to a terminal;
   skipping transmitting, to the terminal, data specific to the terminal;
   skipping transmitting, to the terminal, user-plane data specific to the terminal, but transmitting, to the terminal, control-plane data specific to the terminal;
   discarding or continuing to cache control-plane data specific to the terminal;
   returning a data transfer failure notification to a second CN network element;
   returning, to the second CN network element, a data transfer failure cause being that the terminal does not transmit data, the terminal does not respond, a service is rejected, or the terminal is unreachable;
   sending, to the second CN network element, a request for caching data specific to the terminal and/or valid time information of data caching;
   requesting the second CN network element to discard data specific to the terminal;
   requesting the second CN network element not to send a data notification any longer;
   returning to a third CN network element that the terminal does not transmit data, the terminal is unreachable, or data is unable to reach the terminal;
   releasing or suspending a connection specific to the terminal;
   when data specific to the terminal arrives or is waiting, and the terminal is in a non-connected state, skipping triggering paging the terminal;
   rejecting activating, rejecting establishing, or rejecting resuming a connection between the terminal and a first network; and
   returning a reject cause, where the cause is that the first information is accepted, a connection is deactivated, a connection is released, or a connection is suspended.

Optionally, the communications device 100 further includes:
a first initiating module: configured to initiate a paging to the terminal; where
the data specific to the terminal is: data that is specific to the terminal and that triggers the paging; and/or
the control-plane data specific to the terminal is: control-plane data that is specific to the terminal and that triggers the paging; and/or
the user-plane data specific to the terminal is: user-plane data that is specific to the terminal and that triggers the paging.

Optionally, the data specific to the terminal is: all data specific to the terminal; and/or
the control-plane data specific to the terminal is: all control-plane data specific to the terminal; and/or
the user-plane data specific to the terminal is: all user-plane data specific to the terminal.

Optionally, the data specific to the terminal is: all data specific to the terminal within a period of time indicated by the first valid time information; and/or
the control-plane data specific to the terminal is: all control-plane data specific to the terminal within a period of time indicated by the first valid time information; and/or
the user-plane data specific to the terminal is: all user-plane data specific to the terminal within a period of time indicated by the first valid time information.

Optionally, the first indication information is specifically described in the embodiment of FIG. 1, and details are not described herein again.

Optionally, the first cause information is specifically described in the embodiment of FIG. 1, and details are not described herein again.

Optionally, the first valid time information is specifically described in the embodiment of FIG. 1, and details are not described herein again.

In this embodiment, the communications device 100 is capable of implementing the processes implemented in the method embodiment shown in FIG. 2 of the present invention, with the same beneficial effects achieved. To avoid repetition, details are not described herein again.

Referring to FIG. 11, an embodiment of this disclosure provides a communications device. The communications device is a third communications device. As shown in FIG. 11, the communications device 110 includes:
a second obtaining module 111, configured to obtain first information and/or a first message; and
a second execution module 112, configured to perform a second operation according to the first information and/or the first message; where
the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information;
the first valid time information includes at least one of the following: valid time information of the first indication information, valid time information of the first cause information, valid time information of the MICO indication information, and valid time information of the PSM indication information; and
the second operation includes at least one of the following:
   sending the obtained first information and/or first message to a CN network element;
   skipping activating, skipping establishing, or skipping resuming a user-plane resource for a data tunnel specific to a terminal;
   skipping transmitting, to the terminal, data specific to the terminal;
   skipping transmitting, to the terminal, user-plane data specific to the terminal, but transmitting, to the terminal, control-plane data specific to the terminal;
   discarding or continuing to cache data specific to the terminal;
   requesting the CN network element to release or suspend a connection specific to the terminal;
   deactivating, releasing, or suspending an RRC connection specific to the terminal;
   rejecting activating, rejecting establishing, or rejecting resuming an RRC connection between the terminal and a first network;
   returning a reject cause, where the cause is that the first information is accepted, a connection is deactivated, a connection is released, or a connection is suspended; and
   sending an RRC connection release message to the terminal, where the RRC connection release message includes an RRC connection suspend indication.

Optionally, the communications device 110 further includes:
a second initiating module: configured to initiate a RAN paging to the terminal; where
the data specific to the terminal is: data that is specific to the terminal and that triggers the RAN paging; and/or
the control-plane data specific to the terminal is: control-plane data that is specific to the terminal and that triggers the RAN paging; and/or
the user-plane data specific to the terminal is: user-plane data that is specific to the terminal and that triggers the RAN paging.

Optionally, the data specific to the terminal is: all data specific to the terminal; and/or
the control-plane data specific to the terminal is: all control-plane data specific to the terminal; and/or
the user-plane data specific to the terminal is: all user-plane data specific to the terminal.

Optionally, the data specific to the terminal is: all data specific to the terminal within a period of time indicated by the first valid time information; and/or
the control-plane data specific to the terminal is: all control-plane data specific to the terminal within a period of time indicated by the first valid time information; and/or
the user-plane data specific to the terminal is: all user-plane data specific to the terminal within a period of time indicated by the first valid time information.

Optionally, the first indication information is specifically described in the embodiment of FIG. 1, and details are not described herein again.

Optionally, the first cause information is specifically described in the embodiment of FIG. 1, and details are not described herein again.

Optionally, the first valid time information is specifically described in the embodiment of FIG. 1, and details are not described herein again.

In this embodiment, the communications device 110 is capable of implementing the processes implemented in the method embodiment shown in FIG. 3 of the present invention, with the same beneficial effects achieved. To avoid repetition, details are not described herein again.

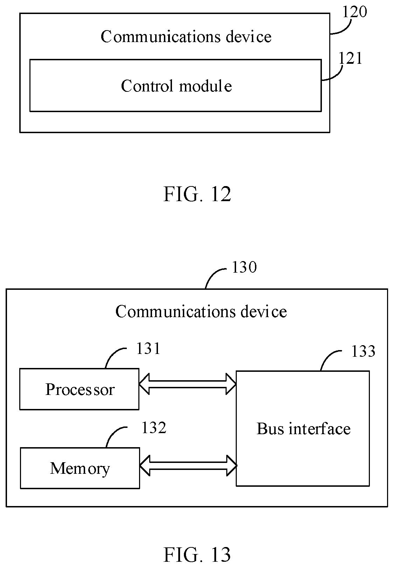

Referring to FIG. 12, an embodiment of this disclosure provides a communications device. The communications device is a fourth communications device. As shown in FIG. 12, the communications device 120 includes:
a control module 121, configured to: in a case that a second condition is satisfied, control a connection related to a first network to enter a non-connected state, enter an idle state, or enter an inactive state; where
the second condition includes any one of the following:
   at least one of a first message and first information is sent to a first-network network element;
   at least one of the first message and the first information is sent to a first-network network element, and authentication with the first network has been completed;
   a second NAS message is received from the first-network network element;
   a service request accept message is received from the first-network network element;
   a service request accept message is received from the first-network network element, where the service request accept message includes any one of the following: indication information for connection release, indication information for connection suspension, and indication information for the first information being accepted;
   a service reject message, an RRC setup reject message, or an RRC resume reject message is received from the first-network network element; and
   a reject cause is received from the first-network network element, where the reject cause is any one of the following: a connection is deactivated, a connection is released, a connection is suspended, and the first information is accepted.

Optionally, the first message includes any one of the following: a first NAS message, a first RRC message, a service request message, an RRC resume request message, an RRC resume complete message, an RRC setup message, an RRC connection setup complete message, a registration request message, an attach request message, and a TAU request message;
the first information includes at least one of the following: first indication information, first cause information, MICO indication information, PSM indication information, and first valid time information; and
the first valid time information includes at least one of the following: valid time information of the first indication information, valid time information of the first cause information, valid time information of the MICO indication information, and valid time information of the PSM indication information; where
the second NAS message is a response message to the first NAS message.

Optionally, the first RRC message is specifically described in the embodiment of FIG. 1, and details are not described herein again.

Optionally, the first indication information is specifically described in the embodiment of FIG. 1, and details are not described herein again.

Optionally, the first cause information is specifically described in the embodiment of FIG. 1, and details are not described herein again.

Optionally, the first valid time information is specifically described in the embodiment of FIG. 1, and details are not described herein again.

In this embodiment, the communications device 120 is capable of implementing the processes implemented in the method embodiment shown in FIG. 4 of the present invention, with the same beneficial effects achieved. To avoid repetition, details are not described herein again.

Referring to FIG. 13, FIG. 13 is a schematic structural diagram of another communications device according to an embodiment of the present invention. As shown in FIG. 13, the communications device 130 includes a processor 131, a memory 132, and a program stored on the memory 132 and capable of running on the processor. The components of the communications device 130 are coupled together by using the bus interface 133, and when the computer program is executed by the processor 131, the processes implemented in the method embodiment shown in FIG. 1 are implemented, or the processes implemented in the method embodiment shown in FIG. 2 are implemented, or the processes implemented in the method embodiment shown in FIG. 3 are implemented, or the processes implemented in the method embodiment shown in FIG. 4 are implemented, with the same technical effects achieved. To avoid repetition, details are not described herein again.

An embodiment of this disclosure further provides a computer-readable storage medium, where a computer program is stored in the computer-readable storage medium, and when the computer program is executed by a processor, the processes implemented in the method embodiment shown in FIG. 1 are implemented, or the processes implemented in the method embodiment shown in FIG. 2 are implemented, or the processes implemented in the method embodiment shown in FIG. 3 are implemented, or the processes implemented in the method embodiment shown in FIG. 4 are implemented, with the same technical effects achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of the present invention.

Some embodiments of the present invention have been described with reference to the attached drawings; however, the present invention is not limited to the aforesaid embodiments, and these embodiments are merely illustrative but are not intended to limit the present invention. Persons of ordinary skill in the art may further derive many other implementations according to the teachings of the present invention and within the scope defined in the claims, and all of the implementations shall fall within the scope of the present invention.

## Claims

1. A connection processing method, applied to a first communications device and comprising:
sending at least one of a first message and first information; wherein
the first message comprises any one of the following: a first non-access stratum NAS message, a first RRC message, a service request message, a radio resource control RRC resume request message, an RRC resume complete message, an RRC setup message, an RRC connection setup complete message, a registration request message, an attach request message, and a tracking area update TAU request message;
the first information comprises at least one of the following: first indication information, first cause information, MICO indication information, PSM indication information, and first valid time information; and
the first valid time information comprises at least one of the following: valid time information of the first indication information, valid time information of the first cause information, valid time information of the MICO indication information, and valid time information of the PSM indication information.

2. The method according to claim 1, wherein the first NAS message or the first RRC message is used for at least one of the following:
responding to paging, and requesting to activate, requesting to establish, or requesting to resume a connection between a terminal and a first network;
indicating not transmitting data specific to the terminal;
requesting not to activate, not to establish, or not to resume a user-plane resource for a data tunnel specific to the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and the first network;
requesting a connection between the terminal and the first network to enter a non-connected state, to enter an idle state, or to enter an inactive state;
requesting to reject activating, reject establishing, or reject resuming a connection between the terminal and the first network;
requesting to return a service reject for a service request of the terminal; and
requesting not to trigger paging the terminal.

3. The method according to claim 1, wherein the first indication information is used for at least one of the following:
indicating a paging response, a connection being activated, a connection being established, or a connection being resumed;
indicating not transmitting data specific to a terminal;
requesting not to activate, not to establish, or not to resume a user-plane resource for a data tunnel specific to the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and a first network;
requesting a connection between the terminal and the first network to enter a non-connected state, to enter an idle state, or to enter an inactive state;
requesting to reject activating, reject establishing, or reject resuming a connection between the terminal and the first network;
requesting to return a service reject for a service request of the terminal; and
requesting not to trigger paging the terminal.

4. The method according to claim 1, wherein the first indication information comprises at least one of the following: indication information that indicates not transmitting control-plane data, and indication information that indicates not transmitting user-plane data; or
the first indication information comprises at least one of the following: indication information that indicates requesting to cache control-plane data specific to a terminal, and indication information that indicates requesting to cache user-plane data specific to the terminal; or
the first indication information comprises at least one of the following: indication information that indicates requesting to discard control-plane data specific to the terminal, and indication information that indicates requesting to discard user-plane data specific to the terminal; or
the first indication information comprises at least one of the following: indication information indicating that the control-plane data is unable to reach the terminal, and indication information indicating that the user-plane data is unable to reach the terminal; or
the first indication information comprises at least one of the following: indication information indicating that the user-plane data is not allowed to trigger paging the terminal, and indication information indicating that the user-plane data is not allowed to trigger paging the terminal.

5. The method according to claim 1, wherein the first indication information is used for at least one of the following:
indicating whether to transmit data specific to a terminal;
indicating whether to request to activate, whether to request to establish, or whether to request to resume a user-plane resource for a data tunnel specific to the terminal;
indicating whether to request to cache data specific to the terminal;
indicating whether to request to discard data specific to the terminal;
indicating whether the terminal is reachable;
indicating whether data is able to reach the terminal;
indicating whether to request to deactivate, release, or suspend a connection between the terminal and the first network;
indicating whether to request a connection between the terminal and the first network to enter a non-connected state, to enter an idle state, or to enter an inactive state;
indicating whether to request to reject activating, whether to request to reject establishing, or whether to request to reject resuming a connection between the terminal and the first network; and
indicating whether to request not to trigger paging the terminal.

6. The method according to claim 1, wherein the first indication information comprises at least one of the following: indication information indicating whether to transmit control-plane data, and indication information indicating whether to transmit user-plane data; or
the first indication information comprises at least one of the following: indication information indicating whether to request to cache control-plane data specific to a terminal, and indication information indicating whether to request to cache user-plane data specific to the terminal; or
the first indication information comprises at least one of the following: indication information indicating whether to request to discard control-plane data specific to a terminal, and indication information indicating whether to request to discard user-plane data specific to the terminal; or
the first indication information comprises at least one of the following: indication information indicating whether the control-plane data is able to reach the terminal, and indication information indicating whether the user-plane data is able to reach the terminal; or
the first indication information comprises at least one of the following: indication information indicating whether the control-plane data triggers a paging to the terminal, and indication information indicating whether the user-plane data triggers a paging to the terminal.

7. The method according to claim 1, wherein the first cause information is used for at least one of the following:
indicating a paging response, an RRC connection being activated, an RRC connection being established, or an RRC connection being resumed;
indicating not transmitting data specific to a terminal;
requesting not to activate, not to establish, or not to resume a user-plane resource for a data tunnel specific to the terminal;
requesting to establish or resume only a control-plane connection of the terminal;
requesting to cache data specific to the terminal;
requesting to discard data specific to the terminal;
indicating that the terminal is unreachable;
indicating that data is unable to reach the terminal;
requesting to deactivate, release, or suspend a connection between the terminal and a first network;
requesting a connection between the terminal and the first network to enter a non-connected state, to enter an idle state, or to enter an inactive state;
requesting to reject activating, reject establishing, or reject resuming a connection between the terminal and the first network; and
requesting not to trigger paging the terminal.

8. The method according to claim 1, wherein the first valid time information comprises at least one of the following:
valid time information for not transmitting data specific to a terminal;
valid time information for caching data specific to the terminal;
valid time information for the terminal being unreachable;
valid time information for data being unable to reach the terminal;
valid time information for a connection between the terminal and a first network remaining deactivated, released, or suspended;
valid time information for a connection between the terminal and a first network remaining in an idle state or an inactive state; and
valid time information for not triggering paging the terminal.

9. The method according to claim 1, wherein the sending at least one of a first message and first information comprises: in a case that a first condition is satisfied, sending at least one of the first message and the first information; wherein
the first condition comprises at least one of the following:
paging from a first network has been received;
it is determined that a connection to the first network remains deactivated, released, or suspended;
it is determined to discard data specific to the terminal from the first network;
it is determined to receive only control-plane data that is specific to the terminal and that comes from the first network, and it is determined to discard user-plane data that is specific to the terminal and that comes from the first network;
it is determined not to immediately receive data that is specific to the terminal and that comes from the first network;
it is determined to request the first network to continue to cache data specific to the terminal;
it is determined not to activate, establish, or resume a user-plane resource for a data tunnel specific to the terminal with the first network; and
it is determined not to perform data transmission with the first network.

10. The method according to claim 1, wherein the first information is sent in any one of the following messages: a first NAS message, a first RRC message, a service request message, an RRC setup request message, an RRC setup complete message, an RRC connection resume request message, an RRC connection resume complete message, a connection suspend request, a registration request message, a TAU request message, an attach request message, a connection setup request specific to a terminal between a RAN network element and a CN network element, and a connection resume request specific to the terminal between the RAN network element and the CN network element.

11. The method according to any one of claims 2, 3, 5, and 7, wherein the data specific to the terminal comprises: control-plane data specific to the terminal and user-plane data specific to the terminal.

12. A connection processing method, applied to a second communications device and comprising:
obtaining at least one of a first message and first information; and
performing a first operation according to at least one of the first message and the first information that are obtained; wherein
the first message comprises any one of the following: a first NAS message, a first RRC message, a service request message, an RRC resume request message, an RRC resume complete message, an RRC setup message, an RRC connection setup complete message, a registration request message, an attach request message, and a TAU request message;
the first information comprises at least one of the following: first indication information, first cause information, MICO indication information, PSM indication information, and first valid time information;
the first valid time information comprises at least one of the following: valid time information of the first indication information, valid time information of the first cause information, valid time information of the MICO indication information, and valid time information of the PSM indication information; and
the first operation comprises at least one of the following:
sending the obtained first information and/or first message to a RAN network element;
skipping activating, skipping establishing, or skipping resuming a user-plane resource for a data tunnel specific to a terminal;
skipping transmitting, to the terminal, data specific to the terminal;
skipping transmitting, to the terminal, user-plane data specific to the terminal, but transmitting, to the terminal, control-plane data specific to the terminal;
discarding or continuing to cache control-plane data specific to the terminal;
returning a data transfer failure notification to a second CN network element;
returning, to the second CN network element, a data transfer failure cause being that the terminal does not transmit data, the terminal does not respond, a service is rejected, or the terminal is unreachable;
sending, to the second CN network element, a request for caching data specific to the terminal and/or valid time information of data caching;
requesting the second CN network element to discard data specific to the terminal;
requesting the second CN network element not to send a data notification any longer;
returning to a third CN network element that the terminal does not transmit data, the terminal is unreachable, or data is unable to reach the terminal;
releasing or suspending a connection specific to the terminal;
when data specific to the terminal arrives or is waiting, and the terminal is in a non-connected state, skipping triggering paging the terminal;
rejecting activating, rejecting establishing, or rejecting resuming a connection between the terminal and a first network; and
returning a reject cause, wherein the cause is that the first information is accepted, a connection is deactivated, a connection is released, or a connection is suspended.

13. The method according to claim 12, wherein before the obtaining at least one of a first message and first information, the method further comprises:
initiating a paging to the terminal; wherein
the data specific to the terminal is: data that is specific to the terminal and that triggers the paging; and/or
the control-plane data specific to the terminal is: control-plane data that is specific to the terminal and that triggers the paging; and/or
the user-plane data specific to the terminal is: user-plane data that is specific to the terminal and that triggers the paging.

14. The method according to claim 12, wherein
the data specific to the terminal is: all data specific to the terminal; and/or
the control-plane data specific to the terminal is: all control-plane data specific to the terminal; and/or
the user-plane data specific to the terminal is: all user-plane data specific to the terminal.

15. The method according to claim 12, wherein
the data specific to the terminal is: all data specific to the terminal within a period of time indicated by the first valid time information; and/or
the control-plane data specific to the terminal is: all control-plane data specific to the terminal within a period of time indicated by the first valid time information; and/or
the user-plane data specific to the terminal is: all user-plane data specific to the terminal within a period of time indicated by the first valid time information.

16. A connection processing method, applied to a third communications device and comprising:
obtaining first information and/or a first message; and
performing a second operation according to the first information and/or the first message; wherein
the first message comprises any one of the following: a first NAS message, a first RRC message, a service request message, an RRC resume request message, an RRC resume complete message, an RRC setup message, an RRC connection setup complete message, a registration request message, an attach request message, and a TAU request message;
the first information comprises at least one of the following: first indication information, first cause information, MICO indication information, PSM indication information, and first valid time information;
the first valid time information comprises at least one of the following: valid time information of the first indication information, valid time information of the first cause information, valid time information of the MICO indication information, and valid time information of the PSM indication information; and
the second operation comprises at least one of the following:
sending the obtained first information and/or first message to a CN network element;
skipping activating, skipping establishing, or skipping resuming a user-plane resource for a data tunnel specific to a terminal;
skipping transmitting, to the terminal, data specific to the terminal;
skipping transmitting, to the terminal, user-plane data specific to the terminal, but transmitting, to the terminal, control-plane data specific to the terminal;
discarding or continuing to cache data specific to the terminal;
requesting the CN network element to release or suspend a connection specific to the terminal;
deactivating, releasing, or suspending an RRC connection specific to the terminal;
rejecting activating, rejecting establishing, or rejecting resuming an RRC connection between the terminal and a first network;
returning a reject cause, wherein the cause is that the first information is accepted, a connection is deactivated, a connection is released, or a connection is suspended; and
sending an RRC connection release message to the terminal, wherein the RRC connection release message comprises an RRC connection suspend indication.

17. The method according to claim 16, wherein before the obtaining the first information and/or a first message, the method further comprises:
initiating a RAN paging to the terminal; wherein
the data specific to the terminal is: data that is specific to the terminal and that triggers the RAN paging; and/or
the control-plane data specific to the terminal is: control-plane data that is specific to the terminal and that triggers the RAN paging; and/or
the user-plane data specific to the terminal is: user-plane data that is specific to the terminal and that triggers the RAN paging.

18. The method according to claim 16, wherein
the data specific to the terminal is: all data specific to the terminal; and/or
the control-plane data specific to the terminal is: all control-plane data specific to the terminal; and/or
the user-plane data specific to the terminal is: all user-plane data specific to the terminal.

19. The method according to claim 16, wherein
the data specific to the terminal is: all data specific to the terminal within a period of time indicated by the first valid time information; and/or
the control-plane data specific to the terminal is: all control-plane data specific to the terminal within a period of time indicated by the first valid time information; and/or
the user-plane data specific to the terminal is: all user-plane data specific to the terminal within a period of time indicated by the first valid time information.

20. A connection processing method, applied to a fourth communications device and comprising:
in a case that a second condition is satisfied, controlling a connection related to a first network to enter a non-connected state, enter an idle state, or enter an inactive state; wherein
the second condition comprises any one of the following:
at least one of a first message and first information is sent to a first-network network element;
at least one of the first message and the first information is sent to a first-network network element, and authentication with the first network has been completed;
a second NAS message is received from the first-network network element;
a service request accept message is received from the first-network network element;
a service request accept message is received from the first-network network element, wherein the service request accept message comprises any one of the following: indication information for connection release, indication information for connection suspension, and indication information for the first information being accepted;
a service reject message, an RRC setup reject message, or an RRC resume reject message is received from the first-network network element; and
a reject cause is received from the first-network network element, wherein the reject cause is any one of the following: a connection is deactivated, a connection is released, a connection is suspended, and the first information is accepted.

21. The method according to claim 20, wherein
the first message comprises any one of the following: a first NAS message, a first RRC message, a service request message, an RRC resume request message, an RRC resume complete message, an RRC setup message, an RRC connection setup complete message, a registration request message, an attach request message, and a TAU request message;
the first information comprises at least one of the following: first indication information, first cause information, MICO indication information, PSM indication information, and first valid time information; and
the first valid time information comprises at least one of the following: valid time information of the first indication information, valid time information of the first cause information, valid time information of the MICO indication information, and valid time information of the PSM indication information; wherein
the second NAS message is a response message to the first NAS message.

22. A communications device, wherein the communications device is a first communications device, comprising:
a sending module, configured to send at least one of a first message and first information; wherein
the first message comprises any one of the following: a first NAS message, a first RRC message, a service request message, an RRC resume request message, an RRC resume complete message, an RRC setup message, an RRC connection setup complete message, a registration request message, an attach request message, and a TAU request message;
the first information comprises at least one of the following: first indication information, first cause information, MICO indication information, PSM indication information, and first valid time information; and
the first valid time information comprises at least one of the following: valid time information of the first indication information, valid time information of the first cause information, valid time information of the MICO indication information, and valid time information of the PSM indication information.

23. A communications device, wherein the communications device is a second communications device, comprising:
a first obtaining module, configured to obtain at least one of a first message and first information; and
a first execution module, configured to perform a first operation according to at least one of the first message and the first information that are obtained; wherein
the first message comprises any one of the following: a first NAS message, a first RRC message, a service request message, an RRC resume request message, an RRC resume complete message, an RRC setup message, an RRC connection setup complete message, a registration request message, an attach request message, and a TAU request message;
the first information comprises at least one of the following: first indication information, first cause information, MICO indication information, PSM indication information, and first valid time information;
the first valid time information comprises at least one of the following: valid time information of the first indication information, valid time information of the first cause information, valid time information of the MICO indication information, and valid time information of the PSM indication information; and
the first operation comprises at least one of the following:
sending the obtained first information and/or first message to a RAN network element;
skipping activating, skipping establishing, or skipping resuming a user-plane resource for a data tunnel specific to a terminal;
skipping transmitting, to the terminal, data specific to the terminal;
skipping transmitting, to the terminal, user-plane data specific to the terminal, but transmitting, to the terminal, control-plane data specific to the terminal;
discarding or continuing to cache control-plane data specific to the terminal;
returning a data transfer failure notification to a second CN network element;
returning, to the second CN network element, a data transfer failure cause being that the terminal does not transmit data, the terminal does not respond, a service is rejected, or the terminal is unreachable;
sending, to the second CN network element, a request for caching data specific to the terminal and/or valid time information of data caching;
requesting the second CN network element to discard data specific to the terminal;
requesting the second CN network element not to send a data notification any longer;
returning to a third CN network element that the terminal does not transmit data, the terminal is unreachable, or data is unable to reach the terminal;
releasing or suspending a connection specific to the terminal;
when data specific to the terminal arrives or is waiting, and the terminal is in a non-connected state, skipping triggering paging the terminal;
rejecting activating, rejecting establishing, or rejecting resuming a connection between the terminal and a first network; and
returning a reject cause, wherein the cause is that the first information is accepted, a connection is deactivated, a connection is released, or a connection is suspended.

24. A communications device, wherein the communications device is a third communications device, comprising:
a second obtaining module, configured to obtain first information and/or a first message; and
a second execution module, configured to perform a second operation according to the first information and/or the first message; wherein
the first message comprises any one of the following: a first NAS message, a first RRC message, a service request message, an RRC resume request message, an RRC resume complete message, an RRC setup message, an RRC connection setup complete message, a registration request message, an attach request message, and a TAU request message;
the first information comprises at least one of the following: first indication information, first cause information, MICO indication information, PSM indication information, and first valid time information;
the first valid time information comprises at least one of the following: valid time information of the first indication information, valid time information of the first cause information, valid time information of the MICO indication information, and valid time information of the PSM indication information; and
the second operation comprises at least one of the following:
sending the obtained first information and/or first message to a CN network element;
skipping activating, skipping establishing, or skipping resuming a user-plane resource for a data tunnel specific to a terminal;
skipping transmitting, to the terminal, data specific to the terminal;
skipping transmitting, to the terminal, user-plane data specific to the terminal, but transmitting, to the terminal, control-plane data specific to the terminal;
discarding or continuing to cache data specific to the terminal;
requesting the CN network element to release or suspend a connection specific to the terminal;
deactivating, releasing, or suspending an RRC connection specific to the terminal;
rejecting activating, rejecting establishing, or rejecting resuming an RRC connection between the terminal and a first network;
returning a reject cause, wherein the cause is that the first information is accepted, a connection is deactivated, a connection is released, or a connection is suspended; and
sending an RRC connection release message to the terminal, wherein the RRC connection release message comprises an RRC connection suspend indication.

25. A communications device, wherein the communications device is a fourth communications device, comprising:
a control module, configured to: in a case that a second condition is satisfied, control a connection related to a first network to enter a non-connected state, enter an idle state, or enter an inactive state; wherein
the second condition comprises any one of the following:
at least one of a first message and first information is sent to a first-network network element;
at least one of the first message and the first information is sent to a first-network network element, and authentication with the first network has been completed;
a second NAS message is received from the first-network network element;
a service request accept message is received from the first-network network element;
a service request accept message is received from the first-network network element, wherein the service request accept message comprises any one of the following: indication information for connection release, indication information for connection suspension, and indication information for the first information being accepted;
a service reject message, an RRC setup reject message, or an RRC resume reject message is received from the first-network network element; and
a reject cause is received from the first-network network element, wherein the reject cause is any one of the following: a connection is deactivated, a connection is released, a connection is suspended, and the first information is accepted.

26. A communications device, comprising a processor, a memory, and a computer program stored in the memory and capable of running on the processor, wherein when the computer program is executed by the processor, the steps of the connection processing method according to any one of claims 1 to 11 are implemented, or the steps of the connection processing method according to any one of claims 12 to 15 are implemented, or the steps of the connection processing method according to any one of claims 16 to 19 are implemented, or the steps of the connection processing method according to claim 20 or 21 are implemented.

27. A computer-readable storage medium, wherein a computer program is stored in the computer-readable storage medium, and when the computer program is executed by a processor, the steps of the connection processing method according to any one of claims 1 to 11 are implemented, or the steps of the connection processing method according to any one of claims 12 to 15 are implemented, or the steps of the connection processing method according to any one of claims 16 to 19 are implemented, or the steps of the connection processing method according to claim 20 or 21 are implemented.
